(19) **Europäisches Patentamt / European Patent Office / Office européen des brevets**

(11) **EP 4 621 704 A1**

(12) **EUROPEAN PATENT APPLICATION**

(43) Date of publication:
**24.09.2025  Bulletin 2025/39**

(21) Application number: **25157113.9**

(22) Date of filing: **11.02.2025**

(51) International Patent Classification (IPC):
**G06T 3/40** $^{(2024.01)}$  **G06V 10/25** $^{(2022.01)}$
**G06V 40/16** $^{(2022.01)}$  **H04N 7/14** $^{(2006.01)}$
**H04N 7/15** $^{(2006.01)}$

(52) Cooperative Patent Classification (CPC):
**H04N 7/15; G06T 3/40; G06V 10/25; G06V 40/161;
H04N 7/147**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.03.2024  US 202418610990**

(71) Applicant: **INTEL Corporation
Santa Clara, CA 95054 (US)**

(72) Inventors:
• **BARBER, Dor**
  **4632821 Herzliya (IL)**
• **COHEN, Uzi**
  **4906902 Petah Tikva (IL)**
• **LITVINOV, Anatoly**
  **30500 Binyamina (IL)**
• **HAVA, Matichin**
  **4906445 Petah Tikva (IL)**

(74) Representative: **HGF
HGF Limited
1 City Walk
Leeds LS11 9DX (GB)**

(54) **VIDEO FRAMING**

(57)    Framing a video effectively and efficiently in video conferencing, video recording, and live streaming can be a challenge. The framing decision preferably captures users and their actions without degrading the user experience. To address this challenge, a framing pipeline can be implemented to include a plurality of detectors, a multi-detector fusion, and a motion planner. Multi-detector fusion can merge detections produced by different detectors at different rates. Motion planner can change the framing decision based on a merged region of interest and a target region of interest produced by multi-detector fusion. The framing pipeline includes one or more features that can achieve a robust, temporally stable, and visually pleasing framed video frames that smoothly tracks users over time without causing unpleasant artifacts in the video conferencing experience.

1000

RECEIVE A FIRST DETECTION OUTPUT AT A FIRST RATE AND A SECOND DETECTION OUTPUT AT A SECOND RATE DIFFERENT FROM THE FIRST RATE 1002

↓

DETERMINE A MERGED REGION OF INTEREST BASED ON THE FIRST DETECTION OUTPUT, THE SECOND DETECTION OUTPUT, THE FIRST RATE, AND THE SECOND RATE 1004

↓

DETERMINE A TARGET REGION OF INTEREST BASED ON MERGED REGION OF INTEREST 1006

↓

DETERMINE AN APPLIED REGION OF INTEREST 1008

↓

DETERMINE ONE OR MORE INTERMEDIATE REGIONS OF INTEREST BASED ON THE MERGED REGION OF INTEREST, THE TARGET REGION OF INTEREST, AND THE APPLIED REGION OF INTEREST 1010

↓

CROP ONE OR MORE THIRD INPUT VIDEO FRAMES OF THE VIDEO USING THE ONE OR MORE INTERMEDIATE REGIONS OF INTEREST AND THE TARGET REGION OF INTEREST TO GENERATE FURTHER FRAMED VIDEO FRAMES 1012

**FIG. 10**

EP 4 621 704 A1

**Description**

Background

Video conferencing and video broadcast or streaming involves capturing a video using a camera at one location. In some cases, the video is stored or recorded. In some cases, the video is transmitted over the Internet to a different location to be displayed to an end user. In some cases, the video is broadcast over the Internet to be displayed to many end users at many different locations.

Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

Figure (FIG.) 1 illustrates video framing, according to some embodiments of the disclosure.
FIG. 2 illustrates a video framing system, according to some embodiments of the disclosure.
FIG. 3 illustrates multi-detector fusion, according to some embodiments of the disclosure.
FIG. 4 illustrates padding, according to some embodiments of the disclosure.
FIG. 5 illustrates a grid counter, according to some embodiments of the disclosure.
FIG. 6 illustrates motion planning, according to some embodiments of the disclosure.
FIG. 7 illustrates steps calculation, according to some embodiments of the disclosure.
FIG. 8 illustrates checking a condition for calculating steps, according to some embodiments of the disclosure.
FIG. 9 illustrates modes for frame motion, according to some embodiments of the disclosure.
FIG. 10 is a flowchart showing a method for framing a video, according to some embodiments of the disclosure.
FIG. 11 is a block diagram of an exemplary computing device, according to some embodiments of the disclosure.

Detailed Description

*Overview*

Framing a video effectively and efficiently in video conferencing, video recording, and live streaming can be a challenge. Video conferencing resolution may be limited to lower rates, e.g., 720p or 1080p, due to network bandwidth and latency concerns. Limited resolution of the video can present a challenge in making the appropriate framing decision that captures salient action in the scene and avoids negatively impacting the user experience. For live or real-time applications, the appropriate framing decision cannot take too long to make. In some framing solutions, audio is used to find an active speaker, and the video may be framed to include the active speaker. Such solutions sometimes result in an awkward user experience when an active speaker is falsely detected (e.g., a user is eating and not speaking) and the video is framed around a false active speaker. Such solutions can also result in a nauseating user experience when the video changes framing in an unstable manner to switch back and forth between different active speakers. For video conferencing and video broadcast/streaming, the framing decision preferably captures users and their actions without degrading the user experience.

To address some of these challenges, a framing pipeline can be implemented to include one or more detectors, a multi-detector fusion block, and a motion planner block. The framing pipeline includes one or more features that can achieve a robust, temporally stable, and visually pleasing framed video frames that smoothly tracks users over time without causing unpleasant artifacts in the video conferencing experience. Processed video frames can be provided as input to the framing pipeline. The framing pipeline can produce framing decisions for cropping the processed video frames. A frame crop block may crop the processed video frames using the framing decisions. A framing decision can include coordinates of a bounding box within a processed video frame. A framing decision can include coordinates of a region of interest within a processed video frame. The cropped video frames may be displayed through one or more display output devices to one or more end users.

In some embodiments, the one or more detectors include a plurality of detectors that operate on the input video frames of the input video. Having a plurality of detectors can ensure that detections are more robust than using a single detector. In some cases, the detectors do not utilize active speaker detection that is based on audio. The detectors may include a person detector. The detectors may include a face detector. A detector may generate a detection output that includes one or more bounding boxes, e.g., a bounding box that bounds an area of an input video frame that likely captures a person, a bounding box bounds an area of an input video frame that likely captures a face. The detectors may generate respective detection outputs at different rates.

Multi-detector fusion can merge detection outputs produced by different detectors at different rates. Multi-detector fusion can include using a grid counter to accumulate detection outputs into a merged region of interest. Multi-detector fusion can include padding the merged region of interest to generate a target region of interest. The padding may include taking into account a minimum size. The padding may include taking into account a desired aspect ratio.

Motion planner can change the framing decision based on the merged region of interest and the target region of interest produced by multi-detector fusion. Motion planner may perform calculation of steps (e.g., one or more intermediate regions of interest, or a sequence of one or more intermediate regions of interest) that can be used to frame one or more video frames. The calculation of steps may take into account the merged region of interest, the target region of interest, and an applied region of interest (e.g., a current region of interest), Motion planner may perform one or more checks to determine whether to change the framing decision. Motion planner may apply a suitable calculation to determine the steps to reach the target region of interest.

Herein, one or more operations of the framing pipeline involves determining a region of interest or a bounding box. Coordinates of a region of interest or a bounding box may include a X-coordinate of the input video frame, a Y-coordinate of the input video frame, a width dimension (e.g., in pixels), and a height dimension (e.g., in pixels). Coordinates of a region of interest or a bounding box (e.g., in scenarios where the aspect ratio is fixed) may include a X-coordinate of the input video frame, a Y-coordinate of the input video frame, and a width dimension (e.g., in pixels) or a height dimension (e.g., in pixels). Coordinates of a region of interest or a bounding box may include a X1,Y1 coordinates of a first corner of the region of interest or bounding box, and a X2,Y2 coordinates of a second corner of the region of interest or bounding box. Coordinates of a region of interest or a bounding box may include a X1,Y1 coordinates of a first corner of the region of interest or bounding box, a X2,Y2 coordinates of a second corner of the region of interest or bounding box, a X3,Y3 coordinates of a third corner of the region of interest or bounding box, and a X4,Y4 coordinates of a fourth corner of the region of interest or bounding box. In some embodiments, the region of interest or the bounding box may be specified by an image mask instead of coordinates.

Besides video conferencing, various techniques for video framing described herein may be applied to video surveillance, remote monitoring by video, video broadcasting, live video streaming, video recording, etc.

## *Examples of framed video frames*

Figure (FIG.) 1 illustrates video framing, according to some embodiments of the disclosure. Input video frames, e.g., input video frame 102, input video frame 104, and input video frame 106, may be provided to a framing pipeline. A framing pipeline may perform operations based on the input video frames to produce framing decisions, framing decision 122 for input video frame 102, framing decision 124 for input video frame 104, and framing decision 126 of input video frame 106. A framing decision may include a region of interest, or a bounding box. The framing decision may include coordinates that specify the region of interest or the bounding box.

Applying framing decision 122 to input video frame 102 may result in output video frame 132 as shown. Applying framing decision 124 to input video frame 104 may result in output video frame 134 as shown. Applying framing decision 126 to input video frame 106 may result in output video frame 136 as shown.

Even though the camera capturing the input video frames remains stationary (e.g., the field of view of the camera stays the same), users or subjects may be moving in and out of frame or moving within the frame. A framing pipeline preferably can detect the users/subjects and determine appropriate framing decisions that capture the users/subjects. Preferably, framing decisions do not crop input video frames that results in the output video frames that frame the user/subject too tightly around the face (e.g., too zoomed in). Preferably, framing decisions do not crop input video frames that results in the output video frames that are pixelated (e.g., too zoomed in or crop is too small). Preferably, framing decisions crop input video frames that results in the output video frames that center the user(s)/subject(s). Preferably, framing decisions crop input video frames that results in the output video frames that capture all user(s)/subject(s) in the input video frame accurately and in a visually appealing manner.

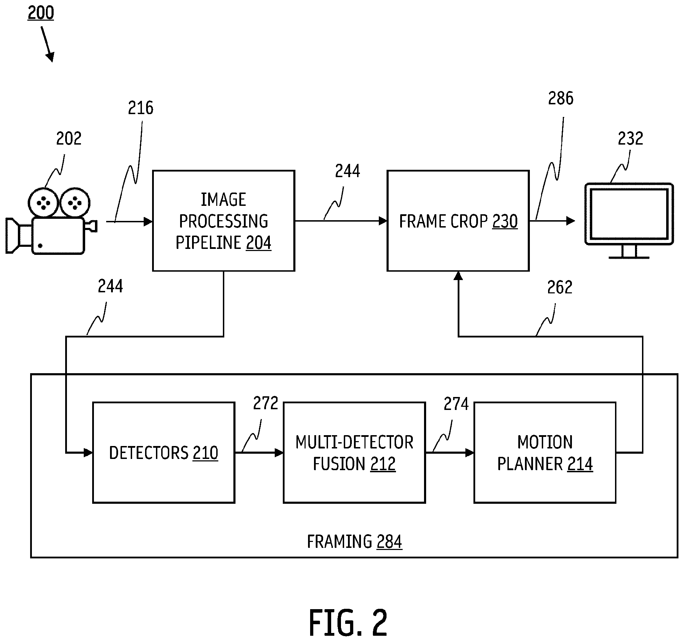

FIGS. 2-10 further illustrate various features of and/or operations performed in the framing pipeline.

## *A system with video framing*

FIG. 2 illustrates a system 200 with video framing, according to some embodiments of the disclosure. System 200 can include a camera 202 or a video capturing device. System 200 can include image processing pipeline 204. System 200 can include framing 284 or a framing pipeline. System 200 can include frame crop 230. System 200 can include display device 232.

Camera 202 may capture a scene and generate a video 216. Video 216 may include a plurality of video frames, or a sequence of video frames. For instance, video 216 may include video frames that are captured at a number of frames per second (e.g., 24 frames per second, 30 frames per second, etc.). In some embodiments, camera 202 is not changing its field of view while capturing video 216. In some embodiments, camera 202 may change its field of view while capturing video 216.

Image processing pipeline 204 may receive video 216. Image processing pipeline 204 may include an image processing unit (e.g., a processor). Video 216 may include raw images as the video frames, image processing pipeline 204 may process the raw images in video 216 to produce processed video 244. Processed video 244 may include processed images as the video frames of processed video 244. Image processing pipeline 204 may perform one or more operations on the raw images, such as denoising, filtering, artifact removal, image enhancement, distortion removal, blurring, sharpening, etc. Processed video 244 may be provided to frame crop 230. Processed video 244 may be provided to framing 284.

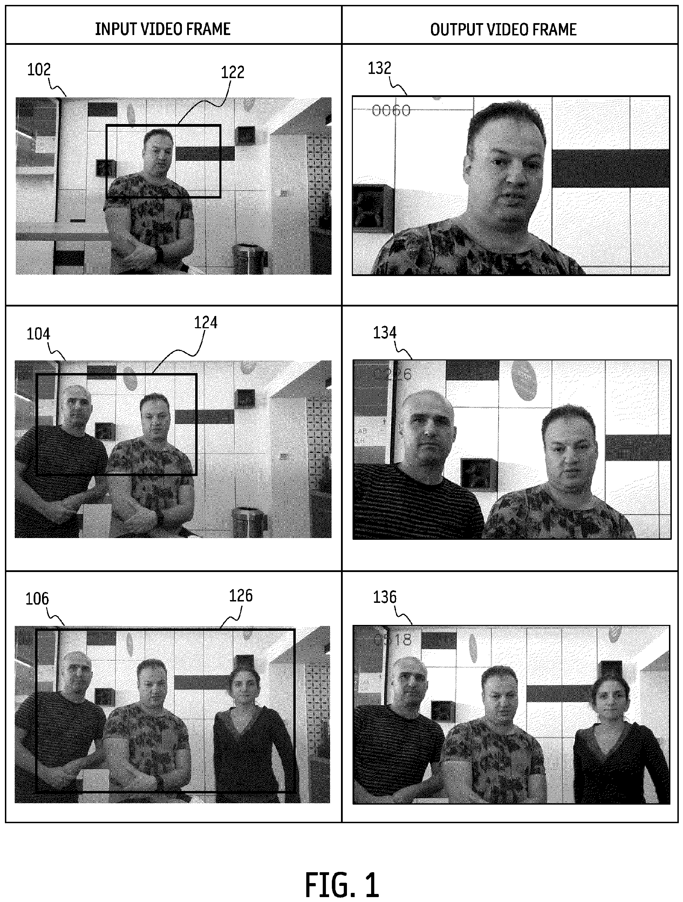

In a video conferencing or video broadcasting scenario, camera 202 may be a front-facing camera whose position or field of view is static. As a result, the field of view may not always be aligned to user(s) or subject(s) in front of camera 202. The field of view may not always be aligned to user(s) or subject(s) even if camera 202 is able to move or change its field of view. The technical task of framing 284 is to make a framing decision that aligns the user(s) or subject(s) within the video frame. In some cases, the framing decision may ensure that all user(s) or subject(s) in the original video frame (e.g., input video frames illustrated in FIG. 1) are to be included and centered in the cropped video frame (e.g., output video frames illustrated in FIG. 2). In some cases, the framing decision may ensure that user(s) or subject(s) moving from side to side or getting closer to or further from camera 202 are to be included and centered in the cropped video frame. In some cases, the framing decision may ensure that user(s) or subject(s) fills the cropped video frame appropriately and/or in a visually appealing manner. In some cases, the framing decision may adapt to movements of user(s) or subject(s) in the changing scene. In some cases, the framing decision may zoom-in or out (digitally) to adapt to the movements.

Framing 284 may include one or more detectors 210. Framing 284 may include multi-detector fusion 212. Framing 284 may include motion planner 214. Framing 284 may receive processed video 244. Processed video 244 may be referred to herein as input video to framing 284. Processed video 244 may include one or more input video frames. An input video frame may include a Red-Green-Blue (RGB) image. An input video frame may include an infrared (IR) image. An input video frame may include a grayscale image. An input video frame may include a Cyan, Magenta, Yellow, and Key (CMYK) image. An input video frame may include an indexed color image. An input video frame may include a Hue, Saturation, and Value (HSV) image. An input video frame may include a YCbCr image. Framing 284 may generate one or more framing decisions 262. One or more framing decisions 262 may correspond to processed image frames of processed video 244. One or more framing decisions 262 may be provided to frame crop 230.

Processed video 244 may be provided as input to one or more detectors 210. One or more detectors 210 may include one or more object detectors. One or more detectors 210 may generate one or more detector outputs. The one or more detector outputs may be produced by one or more corresponding object detectors that operate on the one or more input video frames of processed video 244. In some cases, one or more detectors 210 may include a plurality of object detectors. One or more detectors 210 may include a plurality of object detectors that operate at different rates (e.g., generate detection outputs at different rates). One or more detectors 210 may include a plurality of object detectors that have different objectives/tasks, e.g., to detect different types of objects. One or more detectors 210 may include a plurality of object detectors that apply different techniques, e.g., techniques which have orthogonal or independent/different/complementary dependencies.

In some embodiments, one or more detectors 210 does not include audio-based active speaker detector. Audio-based active speaker detection may result in false detections or undesirable detections (e.g., a user/subject eating loudly, a user/subject making or generating sounds or noise, etc.) that degrade the user experience. Audio-based active speaker detection may require microphone arrays or similar specialized audio hardware or firmware to determine a direction of arrival of audio, which may not be available in some scenarios.

An object detector may include computationally costly operations and may not be applied on every input video frame of processed video 244. Rather, an object detector may be used on every Kth frame, or intermittently applied to every Kth frame of processed video 244. In some cases, an object detector may operate at a rate of X frames per second or produce a detection output for every Kth frame(s). An object detector may include a machine learning model, such as a neural network model, a deep learning model, transformer-based neural network model, etc. An object detector may include a computer vision based model (e.g., involving one or more digital image processing techniques to detect an object). An object detector may apply a resizing and/or padding operation to an input video frame to match input dimensions of a model in the object detector. An object detector may translate or resize a detection output to match dimensions of the input video frame. An object detector may generate, from one or more input video frames of processed video 244, a detection output at a particular rate. A detection output may include one or more regions of interest (e.g., one or more portions) within an input video frame. A region of interest may be specified by a binary mask image having the same dimensions as the input video frame. A detection output may include one or more bounding boxes within an input video frame. A bounding box may include coordinates that bound a detected object within the input video frame. In some cases, a detection output may include a probability or confidence value associated with each one of the one or more regions of interest or bounding boxes. In some cases, an object detector may apply a thresholding operation on the probability or confidence value to filter out or remove region(s) of interest or bounding box(es) with low probabilities or confidence value from the detection output.

One or more detectors 210 may include a person detector, which may detect whether an input video frame in processed video 244 has one or more persons. A person detector may detect the presence of a person in an input video frame. A person detector may detect a person irrespective of the pose of the person. A person detector may detect a person in response to detecting one or more parts of a person (e.g., head, face, hair, arms, hand, torso, legs, feet, etc.). A person detector may detect a person even if only a part of the person is depicted in the input video frame. A person detector may detect a person when a face is also detected by the person detector. A person detector may detect a person when a face (or other parts of the body) is not detected by the person detector. A person detector may include detection based on thermal or IR information. A person detector may output one or more regions of interest and/or one or more bounding boxes. The person detector may output probability or confidence level associated with the one or more regions of interest and/or one or more bounding boxes. A region of interest or a bounding box may specify an area in the input video frame where a person is detected.

One or more detectors 210 may include a face detector, which may detect whether an input video frame in processed video 244 has one or more faces. A face detector may detect the presence of a face in an input video frame. A face detector may detect a face irrespective of the pose of the person's head. A face detector may detect a face in response to detecting one or more parts of a face (e.g., hair, eyebrow, eye, ear, nose, mouth, cheeks, chin, etc.). A face detector may detect a face even if only a part of a face is depicted in the input video frame. A face detector may output one or more regions of interest and/or one or more bounding boxes. The person detector may output probability or confidence level associated with the one or more regions of interest and/or one or more bounding boxes. A region of interest or a bounding box may specify an area in the input video frame where a face is detected.

In some embodiments, one or more detectors 210 includes a face detector and a person detector. Having both detectors can yield more robust detections. A face detector can be computationally less expensive to carry out relative to a person detector. A face detector can readily detect faces of users/subjects. A person detector can complement the face detector by detecting users/subjects based on detections of other parts of a person's body (e.g., hair, hand, back of head, body, etc.). A face detector may operate at a higher rate (more frequently) than a person detector. Together, the face detector and the person detector can detect users/subjects in a robust manner (e.g., even if a user/subject is not directly facing the camera 202 or is outside of the field of view of the camera 202).

One or more detectors 210 may include a screen content detector, which may detect whether an input video frame in processed video 244 has one or more of: screen content, computer-screen content, screens, white board, black board, paper, posters, projections, and/or display devices. A screen content detector may detect screen content even if only a part of a screen/projection/display is depicted in the input video frame. A screen content detector may output one or more regions of interest and/or one or more bounding boxes. The screen content detector may output probability or confidence level associated with the one or more regions of interest and/or one or more bounding boxes. A region of interest or a bounding box may specify an area in the input video frame where screen content is detected.

One or more detectors 210 may include a salient object detector, which may detect whether an input video frame in processed video 244 has one or more salient objects. A salient object detector may detect or identify visually distinctive region(s) in the input video frame. A salient object detector may output one or more regions of interest and/or one or more bounding boxes. The salient object detector may output probability or confidence level associated with the one or more regions of interest and/or one or more bounding boxes. A region of interest or a bounding box may specify an area in the input video frame where a salient object is detected.

One or more detectors 210 may include a foreground object detector, which may detect whether an input video frame in processed video 244 has one or more foreground objects. A foreground object detector may detect or identify one or more objects in the foreground of the scene captured in the input video frame. A foreground object detector may not detect or identify one or more objects in the background of the scene captured in the input video frame. A foreground object detector may output one or more regions of interest and/or one or more bounding boxes. The foreground object detector may output probability or confidence level associated with the one or more regions of interest and/or one or more bounding boxes. A region of interest or a bounding box may specify an area in the input video frame where a foreground object is detected. A region of interest or a bounding box may specify pixels (e.g., in a mask image) in the input video frame associated with the foreground of the scene.

One or more detectors 210 may include an active speaker detector, which may detect whether an input video frame in processed video 244 has one or more active speakers. An active speaker detector may output one or more regions of interest and/or one or more bounding boxes. The active speaker detector may output probability or confidence level associated with the one or more regions of interest and/or one or more bounding boxes. A region of interest or a bounding box may specify an area in the input video frame where an active speaker is detected.

One or more detectors 210 may include an animal detector, which may detect whether an input video frame in processed video 244 has one or more animals. An animal detector may include detection based on thermal or IR information. An animal detector may output one or more regions of interest and/or one or more bounding boxes. The animal may output probability or confidence level associated with the one or more regions of interest and/or one or more bounding boxes. A region of interest or a bounding box may specify an area in the input video frame where an animal is detected.

One or more detectors 210 may include an action detector, which may detect whether an input video frame in processed video 244 has one or more actions. An action detector may determine a salient portion of the input video frame having some kind of action and determine the kind of action by classifying the portion of the input video frame. An action detector may output one or more regions of interest and/or one or more bounding boxes. The animal may output probability or confidence level associated with the one or more regions of interest and/or one or more bounding boxes. A region of interest or a bounding box may specify an area in the input video frame where an action is detected.

One or more detectors 210 may output one or more detection outputs 272. One or more detectors 210 may output a plurality of detection outputs in one or more detection outputs 272. One or more detectors 210 may provide one or more detection outputs 272 to multi-detector fusion 212.

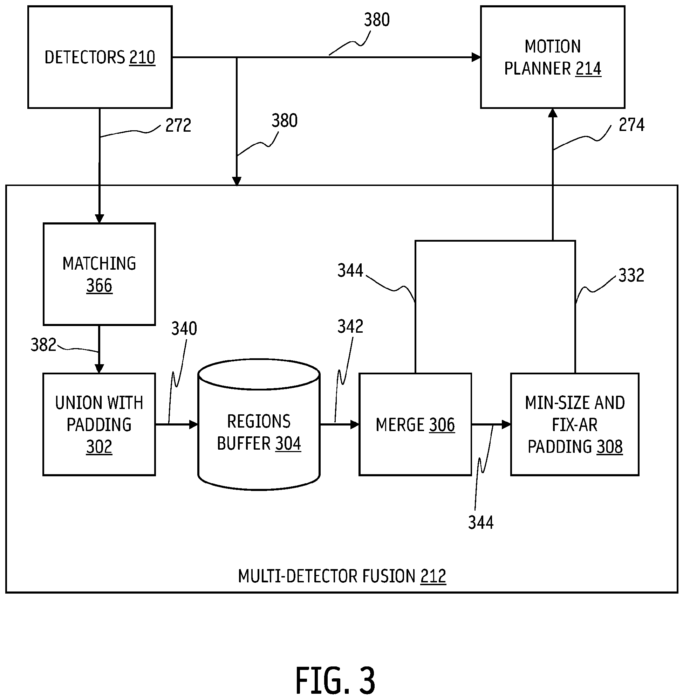

Multi-detector fusion 212 can fuse different detection outputs generated by different object detectors in one or more detectors 210. Multi-detector fusion 212 may fuse the different detection outputs even if the detection outputs are generated at different rates. Multi-detector fusion 212 may remove false detections. Multi-detector fusion 212 may remove duplicates. Multi-detector fusion 212 may generate a (single) merged region of interest that unifies the different detection outputs. Multi-detector fusion 212 may generate a (single) target region of interest that signifies the relevant region of the input video frame. FIGS. 3-5 further illustrate various features of and/or operations performed in multi-detector fusion 212. Multi-detector fusion 212 may receive one or more detection outputs 272. Multi-detector fusion 212 may output one or more regions of interests 274. One or more regions of interest 274 may include a merged region of interest. One or more regions of interest 274 may include a target region of interest.

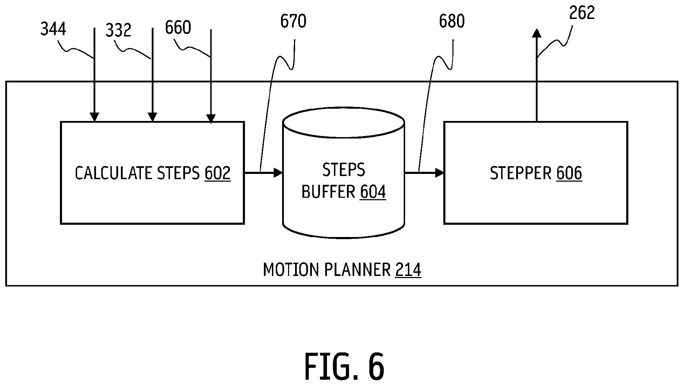

Motion planner 214 can take information from multi-detector fusion 212 to plan how to change the applied region of interest (e.g., a current region of interest used by frame crop 230 to crop a current input video frame). Motion planner 214 may calculate steps (e.g., one or more intermediate regions of interest) to ensure a smooth transition to the target region of interest in the next few frames. FIGS. 6-9 further illustrate various features of and/or operations performed in motion planner 214.

Frame crop 230 may receive one or more framing decisions 262. Frame crop 230 may crop one or more input video frame of processed video 244 based on one or more framing decisions 262. One or more framing decisions 262 may include framing coordinates. One or more framing decisions 262 may include one or more intermediate regions of interests. One or more framing decisions 262 may include a target region of interest. Frame crop 230 may crop one or more input video frames of the input video using one or more framing decisions 262, e.g., the one or more intermediate regions of interest and the target region of interest to generate one or more framed video frames 286. Frame crop 230 may crop an input video frame of the input video using an intermediate region of interest to generate a framed video frame. Frame crop 230 may crop an input video frame of the input video using a target region of interest to generate a framed video frame. Frame crop 230 may remove a portion of the input video frame that is excluded by a framing decision. Frame crop 230 may keep a portion of the input video frame that is included or specified in the framing decision. Frame crop 230 may resize, scale, or up-sample the portion of the input video frame in the framing decision to match a resolution of display device 232. Frame crop 230 may output one or more framed video frames 286 generated using the one or more framing decisions 262. Frame crop 230 may provide one or more framed video frames 286 to display device 232.

Display device 232 may display one or more framed video frames 286 to one or more end users.

*Fusing and processing detection outputs*

FIG. 3 illustrates multi-detector fusion 212, according to some embodiments of the disclosure. Multi-detector fusion 212 may include matching 366. Multi-detector fusion 212 may include union with padding 302. Multi-detector fusion 212 may include regions buffer 304. Multi-detector fusion 212 may include merge 306. Multi-detector fusion 212 may include minimum size (min-size) and fixed aspect ratio (AR) padding 308.

In some cases, multi-detector fusion 212 may receive a signal 380 which triggers multi-detector fusion 212 to perform operations in multi-detector fusion 212. One or more detectors 210 may transmit signal 380 when one or more detectors 210 detects one or more detections in a particular input video frame. One or more detectors 210 may not transmit signal 380 when one or more detectors 210 does not detect any detections in the particular input video frame. In some cases, signal 380 may signal whether there is a presence or absence of detections in the particular input video frame. If signal 380 indicates there are one or more detections, multi-detector fusion 212 may proceed to apply one or more operations in multi-detector fusion 212 to the detection(s) of the particular input frame. The one or more operations in multi-detector fusion 212 may be computationally intensive and may conserve compute cycles by not performing the one or more operations when no detections are detected in the particular input video frame.

In some cases, motion planner 214 may receive signal 380, which may indicate whether there are no detections in a particular input video frame. Operations in multi-detector fusion 212 may be bypassed. Motion planner 214 may, in response to receiving signal 380 indicating there are no detections for a number of input video frames, calculate steps to change the framing/cropping to reach the full size of the input video frame (e.g., zoom out to a no cropping state). Motion planner 214 may calculate steps between an applied region of interest to a target region of interest that represents no cropping.

Multi-detector fusion 212 may receive one or more detection outputs 272. As discussed previously, the one or more detection outputs 272 one or more detection output at respective rates. A detection interval may specify the number of frames between consecutive detections, or the number of frames where a detector was active. The detection interval may relate to the rate, such as the first rate and the second rate. For every detection interval (e.g., detection interval may include a K number of frames, or detection interval resets every Kth frame), the detector may be active. For a detection output received at a rate of every frame, the detection interval may be 1 frame. For a detection output received at a rate of every 15 frames, the detection interval may be 15 frames. For every detection interval, a detector may process an input video frame and produce a detection output having (a list of) one or more bounding boxes or regions of interest based on the input imager frame. For a given input video frame, multi-detector fusion 212 may receive 0 detection outputs due to no detector being active, receive 1 detection output due to one detector being active, receive 2 detection outputs due to two detectors being active, or receive D detection outputs due to D detectors being active.

In some cases, one or more detection outputs 272 may be provided as input to matching 366. In a scenario where multiple detectors are active for a particular input video frame, multi-detector fusion 212 may receive multiple detection outputs in one or more detection outputs 272. Matching 366 can implement a procedure to deduplicate detections in the multiple detection outputs in one or more detection outputs 272. For example, multi-detector fusion 212 may receive, for a particular input video frame, a detection output generated by a person detector and a detection output generated by a face detector. Matching 366 may implement a procedure to determine a tightest bounding box found for each person detected in the particular input video frame based on the detection output generated by a person detector and the detection output generated by a face detector. Matching 366 may apply a matching criterion that checks whether at least 80% (or another suitable threshold) of a bounding box for a face detection is inside a bounding box for a person detection. The matching criterion, if true, suggests that the face detection and the person detection are detecting the same person and may be duplicative. Matching 366 may remove (a duplicative) one of the bounding boxes from one or more detection outputs 272. Matching 366 may remove the bounding box for the face detection from the detection output generated by the face detector and keep the bounding box for the person detection in the detection output generated by the person detector. Alternatively, matching 366 may remove the bounding box for the person detection from the detection output generated by the person detector and keep the bounding box for the face detection in the detection output generated by the face detector. Matching 366 may produce one or more filtered detection outputs 382. One or more filtered detection outputs 382 may include a first detection output at a first rate having a first bounding box specifying an area in at least one of the one or more first input video frames of where a face is detected. One or more filtered detection outputs 382 may include a second detection output at a second rate having a second bounding box specifying an area in at least one of the one or more first input video frames where a person is detected, and a face is not detected.

Union with padding 302 may receive one or more detection outputs 272 or one or more filtered detection outputs 382. Union with padding 302 may pad one or more detections (e.g., one or more bounding boxes in a detection output). Union with padding 302 may pad a bounding box proportionally to the dimensions of the bounding box. Union with padding 302 may pad a bounding box according to a configuration that is specific to the detector that produced the bounding box (bounding boxes produced by different detectors in one or more detectors 210 may be padded according to different configurations).

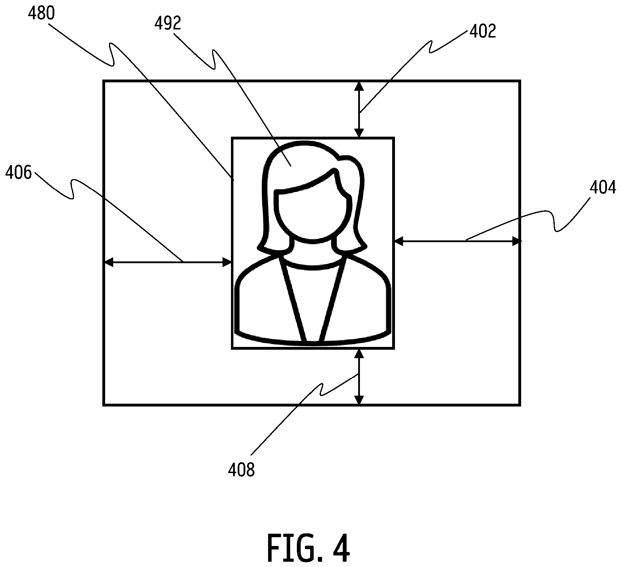

FIG. 4 illustrates padding, according to some embodiments of the disclosure. Union with padding 302 may perform the padding illustrated in FIG. 4. A person detector may have detected person 492 and produced a bounding box 480 as depicted in a detection output of person detector. Bounding box 480 may have a width, e.g., *detection_width.* Bounding box 480 may have a height, e.g., *detection_height.* Bounding box 480 may be padded on the left by a left padding amount 406, e.g., *padding_left.* Bounding box 480 may be padded on the right by a right padding amount 404, e.g., *padding_right.* Bounding box 480 may be padded on top by a top padding amount 402, e.g., *padding_top.* Bounding box 480 may be padded on the bottom by a bottom padding amount 408, e.g., *padding_bottom.* The padding amounts may be calculated as follows, by multiplying a dimension of bounding box 480 by a corresponding scaling factor:

$$padding\_left = detection\_width * config\_factor\_sides \qquad \textbf{(eq. 1)}$$

$$padding\_right = detection\_width * config\_factor\_sides \qquad \textbf{(eq. 2)}$$

$$padding\_top = detection\_height * config\_factor\_top \qquad \textbf{(eq. 3)}$$

$$padding\_bottom = detection\_height * config\_factor\_bottom \qquad \textbf{(eq. 4)}$$

Scaling factors, such as *config_factor_sides, config_factor_top,* and *config_factor_bottom,* may be predetermined for a particular detector. The scaling factors may be different for different detectors. The scaling factors may be determined based on user input (e.g., user configuration). Scaling proportionally to the dimensions of the bounding box 480 may result in more visually appealing framing decisions (e.g., avoid framing too tightly around faces and/or people).

Referring back to FIG. 3, union with padding 302 may determine padded bounding boxes for one or more detection outputs 272 or one or more filtered detection outputs 382. Union with padding 302 may pad a first bounding box for a first one of the one or more first input video frames in the first detection output according to a first configuration to generate a first padded bounding box. Union with padding 302 may pad a second bounding box for the first one of the one or more first input video frames in the second detection output according to a second configuration to generate a second padded detection output. Union with padding 302 may pad a third bounding box for the first one of the one or more first input video frames in the first detection output according to the first configuration to generate a third padded bounding box. Union with padding 302 may pad a fourth bounding box for the first one of the one or more first input video frames in the second detection output according to the second configuration to generate a fourth padded bounding box.

Union with padding 302 may perform a union or spatial aggregation operation based on at least a subset of the one or more padded bounding boxes to produce one or more joined regions 340. In some cases, one or more padded bounding boxes in a detection output produced for a particular input video frame may be joined to form a (single) joined region. In some cases, one or more padded bounding boxes in multiple detection outputs produced for a particular input video frame may be joined to form a (single) joined region. The joined region may include a union of the one or more padded bounding boxes in a particular detection output. The joined region may include a smallest bounding box that includes all of the one or more padded bounding boxes.

In the example having one or more of the first padded bounding box, the second padded bounding box, the third padded bounding box, and the fourth padded bounding box, union with padding 302 may generate a joint region that is or includes at least a union of at least the first padded bounding box and the second padded bounding box. Union with padding 302 may generate a joint region that is or includes at least a union of at least the first padded bounding box, the second padded bounding box, and the third padded bounding box. Union with padding 302 may generate a joint region that is or includes at least a union of at least the first padded bounding box, the second padded bounding box, the third padded bounding box, and the fourth padded bounding box. Union with padding 302 may generate a joint region that is or includes at least a union of at least the first padded bounding box and the third padded bounding box. Union with padding 302 may generate a joint region that is or includes at least a union of at least the second padded bounding box and the fourth padded bounding box.

Union with padding 302 may store one or more joined regions 340 in regions buffer 304. Regions buffer 304 may store or hold one or more joined regions 340 for a predetermined number of input video frames. Regions buffer 304 may hold (past) one or more joined regions 340 for temporal purposes and/or for robustness over time. Regions buffer 304 may hold historical detections or information for a fixed period of time, or the predetermined number of input video frames. Regions buffer 304 may hold a sliding window of one or more joined regions 340, where the sliding window size is the predetermined number of input video frames. Regions buffer 304 may include a first-in-first-out buffer to store the one or more joined regions 340 for the predetermined number of input video frames. Regions buffer 304 may include a slot for each input video frame of the predetermined number of input video frames. The slot may store one or more joined regions 340 determined for a particular input video frame. When one or more joined regions for a latest (most recent) input video frame is added to regions buffer 304, one or more joined regions for the oldest input video frame may be removed from regions buffer 304.

Regions buffer 304 may store a plurality of joint regions (e.g., one or more joined regions 340). The joint regions can be generated based on one or more of: the first detection output and the second detection output. Joint regions generated based on the first detection output may have a first rate or may be produced and/or added to regions buffer 304 according to a first detection interval (e.g., every K1th number of frames). Joint regions generated based on the first detection output may have a second rate or may be produced and/or added to regions buffer 304 according to a second detection interval (e.g., every K2th number of frames).

In some scenarios, where one or more joined regions 340 may include first joined regions determined from a first detection output produced by a first detector in one or more detectors 210 at a first rate, and second joined regions determined from the determined from a second detection output produced by a second detector in one or more detectors 210 at a second rate. A given slot in regions buffer 304 may include a first joined region. A given slot in regions buffer 304 may include a second joined region. A given slot in regions buffer 304 may include a first joined region and a second joined region. Regions buffer 304 may include 24-48 slots. Regions buffer 304 may store one or more joined regions 340 produced for a second to two seconds of video.

Merge 306 may determine a merged region of interest based on the first detection output, the second detection output, the first rate, and the second rate. Merge 306 may receive one or more joined regions 342 stored in regions buffer 304 into a single region of interest, e.g., a merged region of interest 344. Merge 306 may read from regions buffer 304 and retrieve one or more joined regions 342 corresponding to a predetermined number of (past) input video frames. Merge 306 may aggregate or combine the information in the slots of regions buffer 304 storing historical or a sliding window of one or more joined regions 340 to produce the merged region of interest 344. The merged region of interest 344 may include or represent positional information about objects in the merged region of interest 344. The merged region of interest 344 may be temporarily stable because the merged region of interest 344 includes information aggregated over a predetermined number of input video frames (e.g., one or more joined regions 342 stored in regions buffer 304). The merged region of interest 344 may be temporarily stable because the merged region of interest 344 can exclude jitter, noise, or small changes in the positions of one or more joined regions 342 over a period of time.

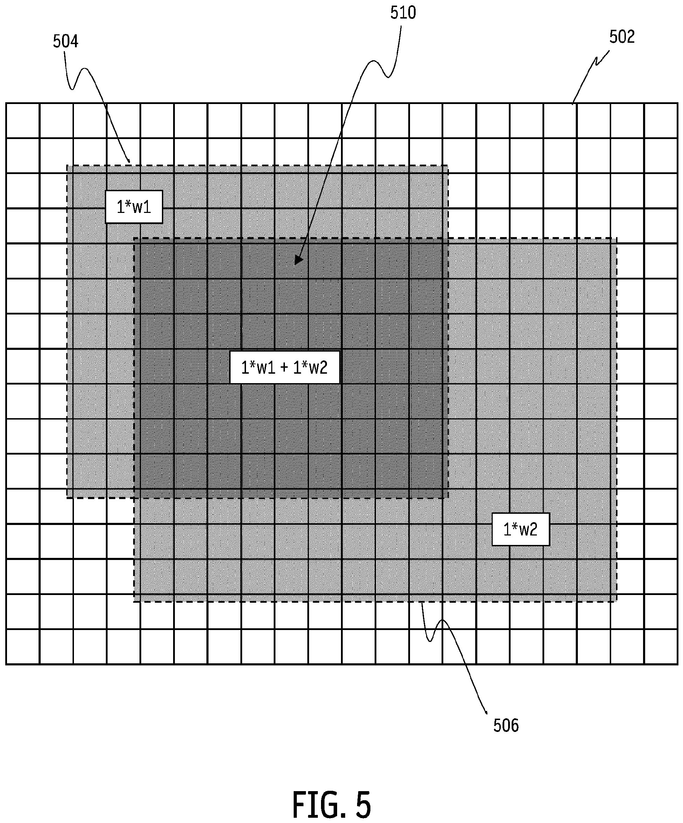

Merge 306 may implement a grid counter to count a number of detections found for each pixel based on the one or more joined regions 342 retrieved from regions buffer 304 corresponding to a predetermined number of input video frames in the past. FIG. 5 illustrates grid counter 502, according to some embodiments of the disclosure. Grid counter 502 may include cells that correspond to pixels of an input video frame. A joined region in one or more joined regions 342 may include a region of interest or a bounding box. The joined region may include or bound one or more pixels. As depicted, one or more joined regions 342 may include first joint region 504 and second joint region 506.

Merge 306 may use grid counter 502 to count a number of hits for each cell. A hit for a cell may be defined as a joined region hitting the cell/pixel (e.g., the cell/pixel is located in or within the joined region). Merge 306 may receive one or more joined regions 342 from regions buffer 304 (e.g., a first-in-first-out buffer). Merge 306 may accumulate hits of the joint regions on the cells of grid counter 502. Merge 306 may produce a merged region of interest based on the grid counter 502. In some cases, the number of hits for a cell may be compared against a threshold, and only cells having a number of hits above or equal to the threshold form the merged region of interest. Cells having a number of hits fewer than the threshold are discarded or not used to form the merged region of interest 344. Merge 306 may produce the merged region of interest based on the grid counter 502 and a threshold on the hits in grid counter 502.

First joint region 504 may cause cells within first joint region 504 in grid counter 502 to add a hit of 1. Second joint region 506 may cause cells within second joint region 506 in grid counter 502 to add a hit of 1. Cells within an overlapping region 510 (where first joint region 504 and second joint region 506 overlap each other) to have a hit of 2. A threshold may be set at 2 or a suitable number. Only cells within overlapping region 510 are used to form the merged region of interest 344, and cells having a hit of 1 outside of overlapping region 510 are discarded or not used to form the merged region of interest 344.

The threshold can filter out false detections and make the merged region of interest 344 more resilient against errors. The threshold can be fixed. The threshold can be determined based on one or more factors. The threshold can be determined based on probabilities and/or confidence values in one or more detection outputs 272. The threshold can be determined based on a quality of the video. The threshold can be determined based on performance (e.g., precision and recall) of one or more detectors 210. The threshold can be determined based on the amount of motion in the video. As a result, the merged region of interest 344 produced using the grid counter 502 and the threshold is a robust measure for the location and size of people in the input video frame.

In some cases, one or more joined regions 342 in regions buffer 304 may have been produced by different detectors and may be added to regions buffer 304 according to different rates. The accumulation of hits may be temporally weighted in accordance with the different rates. Less frequently added joined regions may be weighted higher than more frequently added joined regions when accumulating hits to balance the different rates of the detectors. In some embodiments, the joint regions can include a first joint region generated based on the first detection output in one or more detection outputs 272 and a second joint region generated based on the second detection output in one or more detection outputs 272. The first detection output may have been generated according to a first rate. The first rate may specify that the first detection output is received every first number of frames (e.g., 1 frame). The second detection output may have been generated according to a second rate. The second rate may specify that the second detection output is received every second number of frames (e.g., 15 frames). The first number and the second number may be different. Merge 306 may accumulate the hits on the cells in the grid counter 502 by computing weighted sums according to the first number and the second number. For example, joint region 504 may be added to regions buffer 304 every K1th frame, and second joint region 506 may be added to regions buffer 304 every K2th frame. A hit on a cell in grid counter 502 for first joint region 504 may be weighted based on a first weight W1, which corresponds to the K1. First weight W1 may equal to or may be based on K1. A hit on a cell in grid counter 502 for first joint region 504 may be valued at 1*W1. A hit on a cell in grid counter 502 for second joint region 506 may be weighted based on a second weight W2, which corresponds to the K2. Second weight W2 may equal to or may be based on K2. A hit on a cell in grid counter 502 for second joint region 506 may be valued at 1*W2. In the overlapping region 510, merge 306 may compute a weighted sum according to 1*W1+1*W2. If first joint region 504 may be added to regions buffer 304 every frame (W1=1), and second joint region 506 may be added to regions buffer 304 every 15th frame (W2=15), the weighted sum may be equal to 1*W1+1*W2=1*1 +1*15=16. A number of hits in a cell in overlapping region 510 may be equal to 16.

The merged region of interest 344 may be provided as part of one or more regions of interest 274 to motion planner 214.

Min-size and fixed-AR padding 308 may receive a merged region of interest 344. The merged region of interest 344 may correspond to a particular input video frame. Min-size and fixed-AR padding 308 may receive a plurality of merged regions of interest 344 corresponding to a plurality of input video frames. Min-size and fixed-AR padding 308 may determine a target region of interest 332. The target region of interest 332 may correspond to the particular input video frame. Min-size and fixed-AR padding 308 may determine a plurality of target regions of interest 332 for corresponding to a plurality of input video frames. Target region of interest 332 may be provided as part of one or more regions of interest 274 to motion planner 214.

Min-size and fixed-AR padding 308 may determine the target region of interest 332 by modifying the merged region of interest 344 to conform to one or more user configurations, such as minimum size requirement and desired aspect ratio. The size of merged region of interest 344 may be increased to match one or more user configurations while keeping detected objects centered in the target region of interest 332. The size of merged region of interest 344 may be increased by equal amounts on the left side and the right side of merged region of interest 344. The size of merged region of interest 344 may be increased by equal amounts on the top and the bottom of merged region of interest 344. The resulting target region of interest 332 determined based on the merged region of interest 344 may include or represent desired or potential framing coordinates to be achieved by motion planner 214. Min-size and fixed-AR padding 308 may pad the merged region of interest 344 to ensure the target region of interest 332 is not too small. Min-size and fixed-AR padding 308 may pad the merged region of interest 344 to ensure the target region of interest 332 has an appropriate aspect ratio. Min-size and fixed-AR padding 308 may increase a size of the merged region of interest 344 to reach a minimum size to produce the target region of interest 332 while centering the merged region of interest 344 within the target region of interest 332. Min-size and fixed-AR padding 308 may increase a size of the merged region of interest 344 to reach an aspect ratio to produce the target region of interest 332 while centering the merged region of interest 344 within the target region of interest 332.

*Planning steps or intermediate regions of interest to reach a target region of interest*

FIG. 6 illustrates motion planning, according to some embodiments of the disclosure. As the scene changes, the merged region of interest 344 and the target region of interest 332 determined by multi-detector fusion 212 of FIG. 2 may change as well. Motion planning may include determining steps or intermediate regions of interest to change the framing or cropping as the scene changes. Motion planning may be performed by motion planner 214. The steps or intermediate regions of interest determined by motion planner 214 can cause the framing or cropping to move or change over time or a number of input video frames. Preferably, motion planner 214 may perform operations and/or checks to ensure that changes in framing or cropping over time or a number of input video frames result in smooth and/or visually satisfying transitions to new target regions of interest. Motion planner 214 may ensure that framing/cropping remains temporally stable and is not changing abruptly.

Motion planner 214 may include calculate steps 602. Motion planner 214 may include steps buffer 604. Motion planner 214 may include stepper 606. Motion planner 214 may receive the merged region of interest 344 (e.g., as determined in multi-detector fusion 212 of FIG. 2). Motion planner 214 may receive the target region of interest 332 (e.g., as determined in multi-detector fusion 212 of FIG. 2). Motion planner 214 may receive an applied region of interest 660. The applied region of interest 660 may be a current region of interest. The applied region of interest 660 may be a region of interest that is used to crop a (current) input video frame of the input video to generate a (current) framed video frame. The applied region of interest 660 may be determined by the framing pipeline, such as framing 284 of FIG. 2. Motion planner 214 may output one or more framing decisions 262. One or more framing decisions 262 may include framing coordinates for cropping one or more input video frames in processed video 244. One or more framing decisions 262 may include one or more intermediate regions of interest (e.g., one or more bounding boxes) for cropping one or more input video frames in processed video 244. Motion planner 214 may determine one or more intermediate regions of interest based on the merged region of interest, the target region of interest, and the applied region of interest.

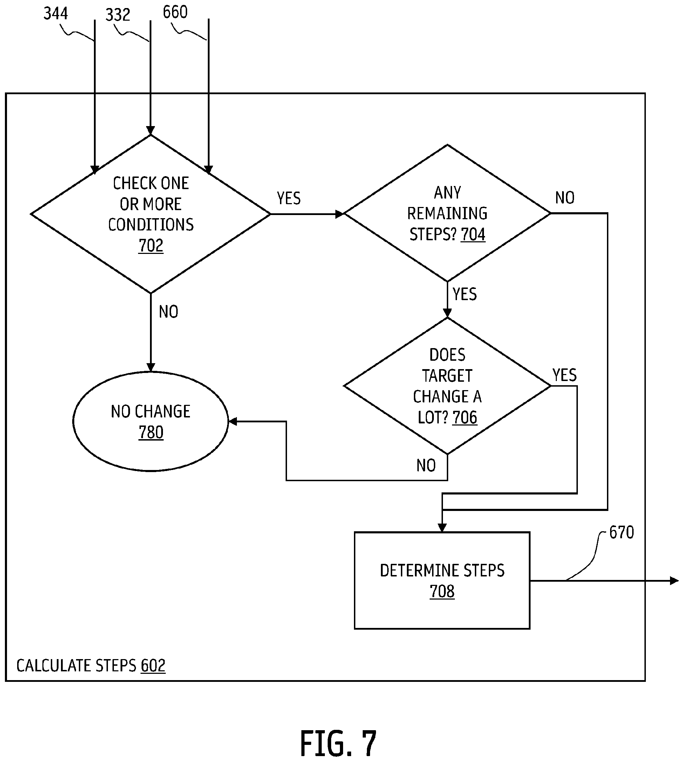

Calculate steps 602 may receive a merged region of interest 344, a target region of interest 332, and an applied region of interest 660. Calculate steps 602 may implement a method illustrated in FIG. 7. Calculate steps 602 may output one or more steps 670. One or more steps 670 may include, e.g., one or more intermediate regions of interest and a target region of interest. One or more steps 670 may include a sequence of one or more steps. One or more steps 670 may include a queue of one or more steps. One or more steps 670 may be stored in steps buffer 604.

Stepper 606 may retrieve the sequence of one or more steps 680 from steps buffer 604 and output the sequence of one or more steps 680 in sequence to frame crop 230 of FIG. 2. Stepper 606 may cause frame crop 230 to sequentially (and one at a time) apply of the one or more steps 670 to one or more input video frames. Stepper 606 may pop the next step off steps buffer 604 to output the next step in one or more framing decisions 262 and remove the next step from the steps buffer 604. Stepper 606 may repeatedly pop the next step off steps buffer 604 until steps buffer 604 is empty.

FIG. 7 illustrates operations for steps calculation, according to some embodiments of the disclosure. The operations may be performed by calculate steps 602.

In 702, one or more conditions are checked. The one or more conditions may be checked to ensure that framing/cropping is not changing/updated too frequently or unnecessarily. The one or more conditions may be checked to ensure that framing/cropping is not changing when the scene is substantially static. The one or more conditions may be checked to ensure that framing/cropping changes when the scene is changing significantly. In some cases, if at least one of the conditions is met, the YES path is followed to proceed to 704. In some cases, if two or more of the conditions are met, the YES path is followed to proceed to 704. In some cases, if three or more of the conditions are met, the YES path is followed to proceed to 704. In some cases, the one or more conditions may be combined by suitable logic to determine whether the YES path is followed to proceed to 704 or the NO path is followed to proceed to no change 780.

One exemplary condition checked in 702 may include checking whether a border (e.g., top border, right border, bottom border, and left border) of the merged region of interest 344 meets (touches or crosses) a border (e.g., top border, right border, bottom border, and left border) of the applied region of interest 660. If a border of the merged region of interest 344 meets a border of the applied region of interest 660, the user(s)/subject(s) in the scene may have moved significantly within the scene and/or user(s)/subject(s) may have entered or exited the scene. There may be motion in the scene. If the scene is static, e.g., the user(s)/subject(s) in the scene has not moved very much and/or users(s)/subject(s) have not entered or exited the scene, the border of the merged region of interest 344 is not expected to meet a border of the applied region of interest 660. The borders of merged region of interest 344 are expected to be far enough away from the borders of the applied region of interest 660 when the scene is static. This condition may suggest that changing the framing/cropping would be desirable to adapt to the changing scene.

One exemplary condition checked in 702 may include checking whether a padded version of the target region of interest 332 is smaller than the applied region of interest 660. In some cases, the condition may include checking whether the target region of interest 332 has become significantly smaller. The target region of interest 332 may become significantly smaller when user(s)/subject(s) have moved away from the camera. In some cases, the condition may include checking whether the width of the padded version of the target region of interest 332 is smaller than the width of the applied region of interest 660. In some cases, the condition may include checking whether the height of the padded version of the target region of interest 332 is smaller than the height of the applied region of interest 660. In some cases, the condition may include checking whether the width and height of the padded version of the target region of interest 332 are both smaller than the width and height of the applied region of interest 660. This condition may suggest that changing the framing/cropping would be desirable to zoom closer to the user(s)/subject(s).

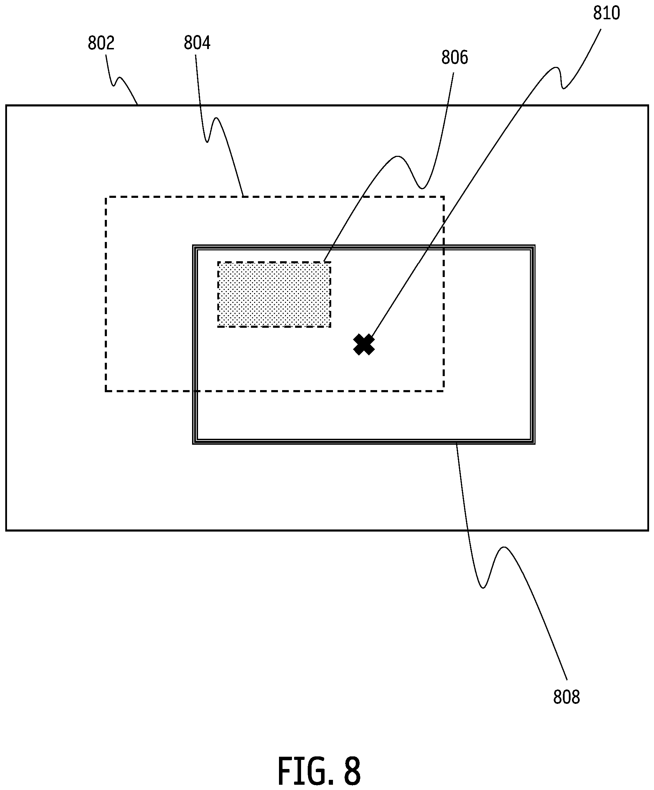

One exemplary condition checked in 702 may include determining that a center point of the merged region of interest 344 is outside of a center region of the applied region of interest 660. In some cases, the condition may include checking whether user(s)/subject(s) in the scene are sufficiently off centered in the current framing. An example of checking the condition is illustrated in FIG. 8. This condition may suggest that changing the framing/cropping would be desirable to recenter the user(s)/subject(s).

In some cases, if none of the conditions in 702 are met, no changes to framing/cropping is deemed necessary. The NO path to no change 780 is followed. In no change 780, no steps are by calculate steps 602.

In some cases, if at least one of the conditions in 702 is met, changes to the framing/cropping may be deemed necessary. The YES path to 704 is followed. Steps may be calculated by calculate steps 602.

In 704, calculate steps 602 may check whether there are one or more (remaining) steps in the steps buffer (e.g., steps buffer 604 has steps to be executed). Calculate steps 602 may check whether the framing pipeline is currently in a process for moving the framing/cropping. If there are one or more steps in the steps buffer, the YES path to 706 is followed. If there are no steps in the steps buffer, the NO path to determine steps 708 is followed.

In 706, calculate steps 602 may check whether the target region of interest 660 has changed significantly from the recent target region of interest for which the one or more (remaining) steps in the steps buffer were calculated. An amount of overlap between the target region of interest 660 and the recent target region of interest may be compared against a threshold to determine whether the target region of interest 660 has changed significantly (or a lot). An amount of non-overlap of the target region of interest 660 and the recent target region of interest may be compared against a threshold to determine whether the target region of interest 660 has changed significantly (or a lot). Intersection over union (IOU) of the target region of interest 660 and the recent target region of interest may be compared against a threshold to determine whether the target region of interest 660 has changed significantly (or a lot). IOU may be defined as the area of overlap divided by the area of union. If the target region of interest 660 has changed significantly, the YES path to determine steps 708 is followed. If the target region of interest 660 has not changed significantly, the NO path to no change 780 is followed.

Determine steps 708 can be triggered when there are no remaining steps (e.g., checked in 704). Determine steps 708 can be triggered to cause steps to be calculated (e.g., to determine a new motion plan or one or more steps) to reach the target region of interest 660. Determine steps 708 can be triggered when there are remaining steps (e.g., checked in 704) and the target region of interest 660 has changed significantly (e.g., checked in 706). Determine steps 708 can be triggered to recalculate steps (e.g., ditch/discard the current motion plan and replan the motion) to reach the target region of interest 660.

Determine steps 708 may operate in one of a plurality of modes. Determine steps 708 may determine one or more steps 670 based on a user configured speed. The user configured speed may specify a number of frames or steps to calculate for reaching the target region of interest 660. The user configured speed may specify a maximum number of pixels that a step is allowed to move between input video frames. The user configured speed may specify a minimum number of pixels that a step is to move between input video frames. In some cases, determine steps 708 may determine one or more steps 670 based on a speed that is dependent on a distance between the applied region of interest 660 to the target region of interest 332. In some cases, determine steps 708 may determine one or more steps 670 based on a speed that is dependent on an amount of motion in the scene.

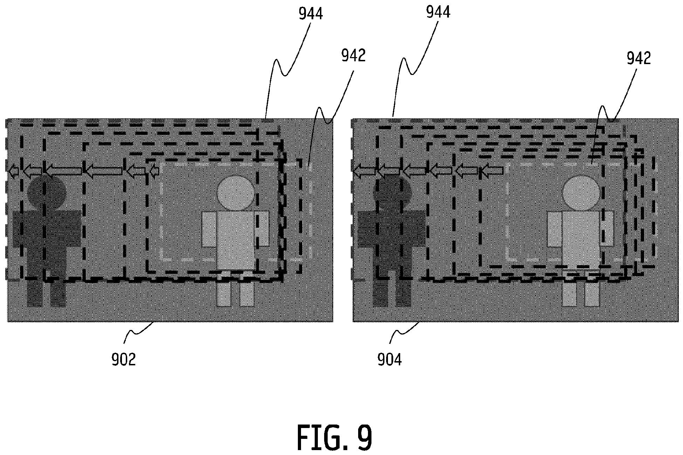

Determine steps 708 may determine a step factor, or a step factor function, which may be used to change the borders of the framing/cropping (e.g., a bounding box or a framing decision) over a number of frames. A border may change, at each step, based on a difference between a border of the target region of interest and a corresponding border of the applied region of interest multiplied by the step factor for the step. Determine steps 708 may determine one or more intermediate regions of interest that moves/changes the framing/cropping from the applied region of interest 660 to the target region of interest 332. The changes in framing/cropping (e.g., the changes in the borders of the applied region of interest or the current framing decision) can be represented by one or more intermediate regions of interest. Two examples of one or more steps 670 (e.g., one or more intermediate regions of interest) determined by determine steps 708 are illustrated in FIG. 9.

FIG. 8 illustrates checking a condition for calculating steps, according to some embodiments of the disclosure. The condition may be checked in 702 of FIG. 7. Input video frame 802 illustrates a full video frame that is not cropped. Bounding box 804 illustrates an applied region of interest, such as applied region of interest 660 of FIGS. 6-7. Bounding box 808 illustrates a merged region of interest, such as merged region of interest 344 of FIGS. 6-7. Region 806 may illustrate a center thirds portion of bounding box 804, or a center thirds portion of the applied region of interest. Region 806 (e.g., the center thirds) may include a center region of the bounding box 804 that makes up one-nineth of the area of the bounding box 804. Mark 810 may illustrate a center point of bounding box 808 or a center point of the merged region of interest. The condition may be based on region 806 (e.g., the center thirds) of the applied region of interest (e.g., a center area of the current framing/cropping), and a center point of the merged region of interest (e.g., a center point of the user(s)/subject(s) in the scene). The condition may include checking whether the center point is outside of the center thirds. When this condition is met, it is likely that the user(s)/subject(s) are no longer substantially centered in the current framing/cropping. Motion planning may be triggered in response to the condition being met.

FIG. 9 illustrates modes for frame motion, according to some embodiments of the disclosure. Graphic 902 illustrates a non-constant step mode. Graphic 904 illustrates a constant step mode. For both graphic 902 and graphic 904, intermediate regions of interests or steps are determined between an applied region of interest (e.g., shown as dashed bounding box 942) and a target region of interest (e.g., shown as dashed bounding box 944). While the applied region of interest and the target region of interest are the same for graphic 902 and graphic 904, the intermediate regions of interest are different due to the mode applied by determine steps 708 of FIG. 7.

For the different modes, the step factor may be used to determine the intermediate regions of interest that allow the framing/cropping (e.g., borders of the bounding box or the current framing decision) to move from the applied region of interest to the target region of interest. The step factor may be used to incrementally change the bounding box in the one or more framing decisions 262 of FIG. 2 from frame to frame and determine the amount of movement or change from frame to frame. The step factor may be a constant step factor that is the same between frames. The step factor may be an adaptive step factor that is different between frames.

For constant step mode, a total difference between the target region of interest and the applied region of interest may be divided equally into identically spaced steps. Determining the one or more intermediate regions of interest can include determining the one or more intermediate regions of interest that evenly divide a difference between the target region of interest and the applied region of interest. One or more intermediate regions of interest may be determined by changing a border of the region of interest according to the following step factor:

$$step\_factor = 1/n \qquad \textbf{(eq. 5)}$$

n is a number of frames set for the transition to the target region of interest. The intermediate regions of interest determined based on the step factor calculated in equation 5 are depicted in graphic 904.

For adaptive step mode, a total difference between the target region of interest and the applied region of interest may be divided into unevenly spaced steps. The steps may be smaller in the beginning of the sequence of steps and in the end of the sequence of steps than the steps in the middle of the sequence of steps. The unevenly spaced steps may cause a visually smoother and/or more natural (e.g., zoom-like and pan-like) transition between the applied region of interest to the target region of interest. Determining the one or more intermediate regions of interest can include determining the one or more intermediate regions of interest that divide a difference between the target region of interest and the applied region of interest according to a normal distribution (see equation 8 below), or a similar distribution where the center of the distribution has larger values than the values of the sides/tails of the distribution. One or more intermediate regions of interest may be determined by changing a border of the region of interest according to the following step factor:

$$x = range\left(m - s, m + 2s, \frac{3s}{n}\right) \qquad \textbf{(eq. 6)}$$

$$step\_factor = Norm(x, m, s) \qquad \textbf{(eq. 7)}$$

$$Norm(x, m, s) = \frac{1}{\sqrt{2\pi}} \exp\left(-\frac{(x-m)^2}{2s^2}\right) \qquad \textbf{(eq. 8)}$$

$n$ is a number of frames set for the transition to the target region of interest. $m$ may be a user configured or predetermined parameter (e.g., m = 10). $s$ may be a user configured or predetermined parameter (e.g., s = 1). Values for the step factor may be precalculated and stored in a look-up table. Intermediate regions of interests may be computed using the step factor values in the look-up table. Intermediate regions of interest determined based on the step factor calculated in equation 7 are depicted in graphic 902.

*An exemplary method for framing a video*

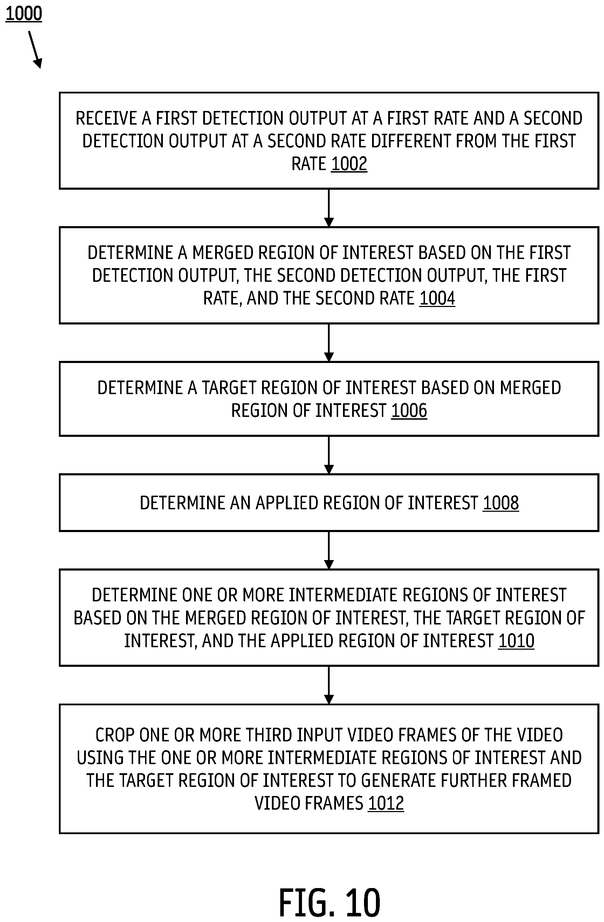

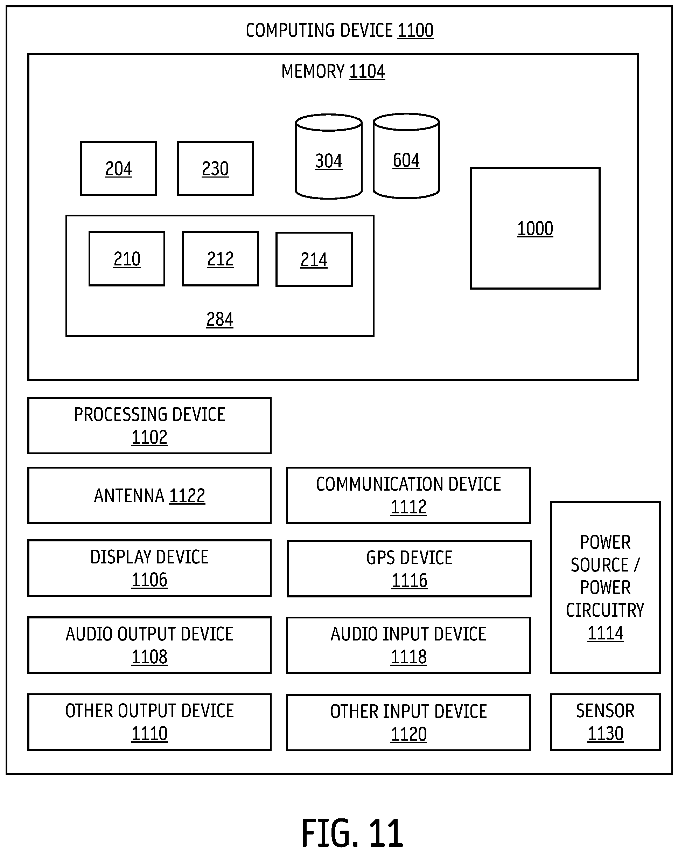

FIG. 10 is a flowchart showing a method for framing a video, according to some embodiments of the disclosure. Method 1000 can be performed using a computing device, such as computing device 1100 in FIG. 11. Method 1000 may be performed using one or more parts illustrated in FIGS. 2-3, 6, and 7. Method 1000 may be an exemplary method performed by parts as illustrated in FIGS. 2-3, 6, and 7.

In 1002, a first detection output at a first rate and a second detection output at a second rate different from the first rate may be received. The first detection output and the second detection output can be generated based on one or more first input video frames of an input video.

In 1004, a merged region of interest may be determined based on the first detection output, the second detection output, the first rate, and the second rate.

In 1006, a target region of interest may be determined based on the merged region of interest.

In 1008, an applied region of interest that is used to crop a second input video frame of the input video to generate a first framed video frame may be determined.

In 1010, one or more intermediate regions of interest may be determined based on the merged region of interest, the target region of interest, and the applied region of interest.

In 1012, one or more third input video frames of the input video may be cropped using the one or more intermediate regions of interest and the target region of interest to generate further framed video frames.

*Exemplary computing device*

FIG. 11 is a block diagram of an apparatus or a system, e.g., an exemplary computing device 1100, according to some embodiments of the disclosure. One or more computing devices 1100 may be used to implement the functionalities described with the FIGS. and herein. A number of components are illustrated in the FIG. 11. can be included in the computing device 1100, but any one or more of these components may be omitted or duplicated, as suitable for the application. In some embodiments, some or all of the components included in the computing device 1100 may be attached to one or more motherboards. In some embodiments, some or all of these components are fabricated onto a single system on a chip (SoC) die. Additionally, in various embodiments, the computing device 1100 may not include one or more of the components illustrated in FIG. 11, and the computing device 1100 may include interface circuitry for coupling to the one or more components. For example, the computing device 1100 may not include a display device 1106, and may include display device interface circuitry (e.g., a connector and driver circuitry) to which a display device 1106 may be coupled. In another set of examples, the computing device 1100 may not include an audio input device 1118 or an audio output device 1108 and may include audio input or output device interface circuitry (e.g., connectors and supporting circuitry) to which an audio input device 1118 or audio output device 1108 may be coupled.

The computing device 1100 may include a processing device 1102 (e.g., one or more processing devices, one or more of the same types of processing device, one or more of different types of processing device). The processing device 1102 may include electronic circuitry that process electronic data from data storage elements (e.g., registers, memory, resistors, capacitors, quantum bit cells) to transform that electronic data into other electronic data that may be stored in registers and/or memory. Examples of processing device 1102 may include a CPU, a GPU, a quantum processor, a machine learning processor, an artificial intelligence processor, a neural network processor, an artificial intelligence accelerator, an application specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 1100 may include a memory 1104, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 1104 includes one or more non-transitory computer-readable storage media. In some embodiments, memory 1104 may include memory that shares a die with the processing device 1102.

In some embodiments, memory 1104 includes one or more non-transitory computer-readable media storing instructions executable to perform operations described with FIGS. 1-10 and herein, such as the method 1000 illustrated in FIG. 10.

Memory 1104 may store instructions that encode one or more exemplary parts. Exemplary parts, such as one or more parts of image processing pipeline 204, frame crop 230, framing 284, one or more detectors 210, multi-detector fusion 212, and motion planner 214, may be encoded as instructions and stored in memory 1104 are depicted. The instructions stored in the one or more non-transitory computer-readable media may be executed by processing device 1102.

In some embodiments, memory 1104 may store data, e.g., data structures, binary data, bits, metadata, files, blobs, etc., as described with the FIGS. and herein. Exemplary data, such as data in regions buffer 304 and data in steps buffer 604, may be stored in memory 1104.

In some embodiments, memory 1104 may store one or more machine learning models (and or parts thereof) that are used in at least one of the one or more detectors 210. Memory 1104 may store training data for training the one or more machine learning models. Memory 1104 may store input data, output data, intermediate outputs, intermediate inputs of one or more machine learning models. Memory 1104 may store instructions to perform one or more operations of the machine learning model. Memory 1104 may store one or more parameters used by the machine learning model. Memory 1104 may store information that encodes how processing units of the machine learning model are connected with each other.

In some embodiments, the computing device 1100 may include a communication device 1112 (e.g., one or more communication devices). For example, the communication device 1112 may be configured for managing wired and/or wireless communications for the transfer of data to and from the computing device 1100. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 1112 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 1112 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 1112 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 1112 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication device 1112 may operate in accordance with other wireless protocols in other embodiments. The computing device 1100 may include an antenna 1122 to facilitate wireless communications and/or to receive other wireless communications (such as radio frequency transmissions). The computing device 1100 may include receiver circuits and/or transmitter circuits. In some embodiments, the communication device 1112 may manage wired communications, such as electrical, optical, or any other suitable communication protocols (e.g., the Ethernet). As noted above, communication device 1112 may include multiple communication chips. For instance, a first communication device 1112 may be dedicated to shorter-range wireless communications such as Wi-Fi or Bluetooth, and a second communication device 1112 may be dedicated to longer-range wireless communications such as global positioning system (GPS), EDGE, GPRS, CDMA, WiMAX, LTE, EV-DO, or others. In some embodiments, a first communication device 1112 may be dedicated to wireless communications, and a second communication device 1112 may be dedicated to wired communications.

The computing device 1100 may include power source / power circuitry 1114. The power source / power circuitry 1114 may include one or more energy storage devices (e.g., batteries or capacitors) and/or circuitry for coupling components of the computing device 1100 to an energy source separate from the computing device 1100 (e.g., DC power, AC power, etc.).

The computing device 1100 may include a display device 1106 (or corresponding interface circuitry, as discussed above). Display device 1106 may include any visual indicators, such as a heads-up display, a computer monitor, a projector, a touchscreen display, a liquid crystal display (LCD), a light-emitting diode display, or a flat panel display, for example.

The computing device 1100 may include an audio output device 1108 (or corresponding interface circuitry, as discussed above). The audio output device 1108 may include any device that generates an audible indicator, such as speakers, headsets, or earbuds, for example.

The computing device 1100 may include an audio input device 1118 (or corresponding interface circuitry, as discussed above). The audio input device 1118 may include any device that generates a signal representative of a sound, such as microphones, microphone arrays, or digital instruments (e.g., instruments having a musical instrument digital interface (MIDI) output).

The computing device 1100 may include a GPS device 1116 (or corresponding interface circuitry, as discussed above). The GPS device 1116 may be in communication with a satellite-based system and may receive a location of the computing device 1100, as known in the art.

The computing device 1100 may include a sensor 1130 (or one or more sensors). The computing device 1100 may include corresponding interface circuitry, as discussed above). Sensor 1130 may sense physical phenomenon and translate the physical phenomenon into electrical signals that can be processed by, e.g., processing device 1102. Examples of sensor 1130 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 1100 may include another output device 1110 (or corresponding interface circuitry, as discussed above). Examples of the other output device 1110 may include an audio codec, a video codec, a printer, a wired or wireless transmitter for providing information to other devices, haptic output device, gas output device, vibrational output device, lighting output device, home automation controller, or an additional storage device.

The computing device 1100 may include another input device 1120 (or corresponding interface circuitry, as discussed above). Examples of the other input device 1120 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1100 may have any desired form factor, such as a handheld or mobile computer system (e.g., a cell phone, a smart phone, a mobile Internet device, a music player, a tablet computer, a laptop computer, a netbook computer, a personal digital assistant (PDA), a personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 1100 may be any other electronic device that processes data.

*Exemplary machine learning models and parts thereof*

The one or more detectors (e.g., detectors 210 of FIG. 2) described herein may be implemented using one or more machine learning models, e.g., using one or more deep learning models, or one or more neural network models.

An execution of a machine learning model, e.g., a neural network model, etc., comprises the process of performing operations in the machine learning model. The operations may be performed for making one or more inferences about input data. The operations may be performed for performing a task (e.g., generating embeddings, output predictions, and/or inferences about the input data). The operations may be performed for training the machine learning model.

A machine learning model refers to computer-implemented systems that can perform one or more tasks. A machine learning model can take an input and generate an output for the task at hand. Using and implementing a machine learning model may involve supervised learning, unsupervised learning, semi-supervised learning, and reinforcement learning. A machine learning model can be implemented in different ways. A machine learning model can include one or more of: an artificial neural network, a deep learning model, a decision tree, a support vector machine, regression analysis, a Bayesian network, a Gaussian process, a genetic algorithm, etc.

Deep learning models (e.g., convolutional neural networks, transformer-based models, etc.) are used in a variety of artificial intelligence and machine learning applications such as computer vision, speech recognition, and natural language processing. Deep learning models may receive and process input such as images, videos, audio, speech, sensor data, text, output of another model, etc. Deep learning models can generate outputs, such as features and predictions, based on the input.

An artificial neural network (or neural network model) may include one or more layers, modules, networks, blocks and/or operator that transform the input into an output. In some embodiments, a layer, module, network, block and/or operator may include one or more processing units and/or one or more processing nodes. A processing unit may receive one or more inputs, perform a processing function or operation, and generate one or more outputs. Processing units may be interconnected to form a network. In some cases, the processing units or nodes may be referred to as neurons. Different types of processing units or nodes may be distinguished by the processing function/operation that is being performed by the processing units or nodes. A processing unit may include one or more parameters. The parameters may be trained or learned. A processing unit may include one or more hyperparameters. Hyperparameters may be set or tuned, adjusted, or set by one or more users of the machine learning model.

One type of processing unit is a convolution block and/or operator. The processing unit applies a convolution operation to the input and generates an output. The convolution operation may extract features from the input and output the features as the output. The convolution operation may transform the input and generate an output. The processing unit may convolve the input with a kernel to generate an output. A kernel may include a matrix. The kernel may encode a function or operation that can transform the input. The kernel may include values or parameters that can be trained or learned. The processing unit may compute inner products (e.g., dot products) with a sliding/moving window capturing local regions or patches of the input and sum and/or accumulate the inner products to generate an output. Inner products may be computed successively across the input matrix, as the sliding/moving windows move across the input matrix. A convolution block and/or operator may be defined by the size of the kernel, e.g., a 1x1 convolution (a convolutional operator having a kernel size of 1x1), a 2x2 convolution(a convolutional operator having a kernel size of 2x2), a 3x3 convolution (a convolutional operator having a kernel size of 3x3), a 4x4 convolution (a convolutional operator having a kernel size of 4x4), a 5x5 convolution (a convolutional operator having a kernel size of 5x5), and so forth. The distance the window slides/moves can be set or defined by the stride of the convolution operator. In some cases, the convolution block and/or operator may apply no padding and uses the input matrix as-is. In some cases, the convolution block and/or operator may apply half padding and pads around a part of the input matrix. In some cases, the convolution block and/or operator may apply full padding and pads around the input matrix. In some cases, the convolution block and/or operator may be defined by a dimension of the filter being applied. For example, a 1-D convolution block and/or operator may apply a sliding convolution filter or kernel of size k (a hyperparameter) to one-dimensional input. Values in the sliding convolution filter or kernel can be trained and/or learned.

An exemplary layer, module, block and/or operator may include a dilation convolution block may increase can extract features at various scales. A dilation convolution block may expand the kernel by inserting gaps between the weights in the kernel. A dilation convolution module may have a dilation rate or dilation factor which indicates how much the kernel is widened. Parameters in the kernel can be trained or learned.

Another type of processing unit is a transformer node. A transformer node may be used in a transformer block. A transformer node may implement an attention mechanism to extract dependencies between different parts of the input to the transformer node. A transformer node may receive an input and generate an output that represents the significance or attention of various parts of the input. A transformer node may include query weights, key weights, and value weights as parameters that can be trained or learned. A transformer node may apply the parameters to extract relational information between different parts of the input to the transformer node.

Another type of processing unit is an activation unit or block. An activation block may implement or apply an activation function (e.g., a sigmoid function, a non-linear function, hyperbolic tangent function, rectified linear unit, leaky rectified linear unit, parametric rectified linear unit, sigmoid linear unit, exponential linear unit, scaled exponential linear function, logistic activation function, Heaviside activation function, identity function, binary step function, soft step function, Gaussian error linear unit, Gaussian function, softplus function, etc.) to an input to the activation block and generate an output. An activation block can be used to map an input to the block to a value between 0 and 1. An activation block can be used to map an input to the block to a zero (0) or a one (1). An activation block can introduce non-linearity. An activation block can learn complex decision boundaries. One or more parameters of the activation function can be trained or learned.

An exemplary layer, module, block, or operator may include an upsampling block. An upsampling block may increase the size of the input features or feature maps. An upsampling block may synthesize values that can be added to the input features or feature maps to increase the size and output features or feature maps that are upsampled.

An exemplary layer, module, block, or operator may include a downsampling block. A downsampling block may perform downsampling of features or feature maps generated by the stages, which may improve running efficiency of machine learning model. A downsampling block may include a pooling layer, which may receive feature maps at its input and applies a pooling operation to the feature maps. The output of the pooling layer can be provided or inputted into a subsequent stage for further processing. The pooling operation can reduce the size of the feature maps while preserving their (important) characteristics. Accordingly, the pooling operation may improve the efficiency of the overall model and can avoid over-learning. A pooling layer may perform the pooling operation through average pooling (calculating the average value for each patch on the feature map), max pooling (calculating the maximum value for each patch of the feature map), or a combination of both. The size of an output of a pooling layer is smaller than the size of the feature maps provided as input to the pooling layer. In some embodiments, the pooling operation is $2 \times 2$ pixels applied with a stride of 2 pixels, so that the pooling operation reduces the size of a feature map by a factor of 2, e.g., the number of pixels or values in the feature map is reduced to one quarter the size. In some embodiments, a pooling layer applied to a feature map of $6\times6$ results in an output pooled feature map of $3\times3$.

An exemplary layer, module, block, or operator may include a projection layer (sometimes referred to as a 1x1 convolution block and/or operator). A projection layer may transform input features into a new space, such as a space that is suitable, informative, and/or useful for tasks being performed by modules downstream (for processing by modules downstream). A projection layer may include a dense layer, or a fully connected layer where each neuron (e.g., a node or processing unit in a neural network) is connected to every neuron of the previous layer. A projection layer may generate and/or output one or more new features (e.g., a new set of features) that are more abstract or high level than features in the input. A projection layer may implement one or more 1x1 convolution operations, where the projection layer may convolve the input features with filters of size $1\times1$ (e.g., with zero-padding and a stride of 1). A projection layer may implement channel-wise pooling or feature map pooling. A projection layer may reduce dimensionality of the input features by pooling features across channels. A projection layer may implement a 1x1 filter to create a linear projection of a stack of feature maps. A projection layer may implement a 1x1 filter to increase the number of feature maps. A projection layer may implement a 1x1 filter to decrease the number of channels. A projection layer may make the feature maps compatible with subsequent processing layers, modules, blocks, or operators. A projection layer may ensure that an element-wise adding operation can be performed to add the output of the projection layer and another feature map. A projection layer can ensure the dimensionality of the output of the projection layer matches the dimensionality of the feature map being element-wise added together. Parameters of the projection layer can be trained or learned.

An exemplary block may include an adder block. An adder block may perform element-wise adding of two or more inputs to generate an output. An adder block can be an exemplary block that can merge and/or combine two or more inputs together. Adding and summing may be synonymous. An adder block may be replaced by a concatenate block.

An exemplary block may include a multiplier block. A multiplier block may perform element-wise multiplication of two or more inputs to generate an output. A multiplier block may determine a Hadamard product.

An exemplary block may include a concatenate block. A concatenate block may perform concatenation of two or more inputs to generate an output. A concatenate block may append vectors and/or matrices in the inputs to form a new vector and/or matrix. Vector concatenation can be appended to form a larger vector. Matrix concatenation can be performed horizontally, vertically, or in a merged fashion. Horizontal matrix concatenation can be performed by concatenating matrices (that have the same height) in the inputs width-wise. Vertical matrix concatenation can be performed by concatenating matrices (that have the same width) in the inputs height-wise. A concatenate block can be an exemplary block that can merge and/or combine two or more inputs together. A concatenate block may be suitable when the two or more inputs do not have the same dimensions. A concatenate block may be suitable when it is desirable to keep the two or more inputs unchanged or intact (e.g., to not lose information). A concatenate block may be replaced by an adder block.

Example 1 provides a method, including receiving a first detection output at a first rate and a second detection output at a second rate different from the first rate, where the first detection output and the second detection output are generated based on one or more first input video frames of an input video; determining a merged region of interest based on the first detection output, the second detection output, the first rate, and the second rate; determining a target region of interest based on the merged region of interest; determining an applied region of interest that is used to crop a second input video frame of the input video to generate a first framed video frame; determining one or more intermediate regions of interest based on the merged region of interest, the target region of interest, and the applied region of interest; and cropping one or more third input video frames of the input video using the one or more intermediate regions of interest and the target region of interest to generate further framed video frames.

Example 2 provides the method of example 1, where: the first detection output includes a first bounding box specifying an area in at least one of the one or more first input video frames where a face is detected.

Example 3 provides the method of example 1 or 2, where: the second detection output includes a second bounding box specifying an area in at least one of the one or more first input video frames where a person is detected and a face is not detected.

Example 4 provides the method of any one of examples 1-3, further including padding a first bounding box for a first one of the one or more first input video frames in the first detection output according to a first configuration to generate a first padded bounding box; and padding a second bounding box for the first one of the one or more first input video frames in the second detection output according to a second configuration to generate a second padded bounding box.

Example 5 provides the method of example 4, further including generating a joint region that includes at least a union of at least the first padded bounding box and the second padded bounding box.

Example 6 provides the method of any one of examples 1-5, further including padding a first bounding box for a first one of the one or more first input video frames in the first detection output according to a first configuration to generate a first padded bounding box; padding a third bounding box for the first one of the one or more first input video frames in the first detection output according to the first configuration to generate a third padded bounding box; and generating a joint region that includes at least a union of at least the first padded bounding box and the third padded bounding box.

Example 7 provides the method of any one of examples 1-6, further including storing one or more joint regions in a first-in first-out buffer, where the one or more joint regions are generated based on the first detection output and the second detection output.

Example 8 provides the method of any one of examples 1-7, where determining the merged region of interest includes receiving one or more joint regions from a first-in first-out buffer; accumulating hits of the one or more joint regions on cells in a grid counter; and producing the merged region of interest based on the grid counter and a threshold on the hits.

Example 9 provides the method of example 8, where: the one or more joint regions include a first joint region generated based on the first detection output and a second joint region generated based on the second detection output; the first rate specifies that the first detection output is received every first number of frames; the second rate specifies that the second detection output is received every second number of frames; and accumulating the hits on the cells in the grid counter includes computing weighted sums according to the first number and the second number.

Example 10 provides the method of any one of examples 1-9, where determining the target region of interest includes increasing a size of the merged region of interest to reach a minimum size to produce the target region of interest while centering the merged region of interest within the target region of interest.

Example 11 provides the method of any one of examples 1-10, where determining the target region of interest includes increasing a size of the merged region of interest to reach an aspect ratio to produce the target region of interest while centering the merged region of interest within the target region of interest.

Example 12 provides the method of any one of examples 1-11, further including determining that a border of the merged region of interest meets a border of the applied region of interest.

Example 13 provides the method of any one of examples 1-12, further including determining that a padded version of the target region of interest is smaller than the applied region of interest.

Example 14 provides the method of any one of examples 1-13, further including determining that a center point of the merged region of interest is outside of a center region of the applied region of interest.

Example 15 provides the method of any one of examples 1-14, where determining the one or more intermediate regions of interest includes determining the one or more intermediate regions of interest that evenly divides a difference between the target region of interest and the applied region of interest.

Example 16 provides the method of any one of examples 1-14, where determining the one or more intermediate regions of interest includes determining the one or more intermediate regions of interest that divides a difference between the target region of interest and the applied region of interest according to a normal distribution.

Example 17 provides one or more non-transitory computer-readable media storing instructions that, when executed by one or more processors, cause the one or more processors to: receive a first detection output at a first rate and a second detection output at a second rate different from the first rate, where the first detection output and the second detection output are generated based on one or more first input video frames of an input video; determine a merged region of interest based on the first detection output, the second detection output, the first rate, and the second rate; determine a target region of interest based on the merged region of interest; determining an applied region of interest that is used to crop a second input video frame of the input video to generate a first framed video frame; determine one or more intermediate regions of interest based on the merged region of interest, the target region of interest, and the applied region of interest; and crop one or more third input video frames of the input video using the one or more intermediate regions of interest and the target region of interest to generate further framed video frames.

Example 18 provides the one or more non-transitory computer-readable media of example 17, where: the first detection output includes a first bounding box specifying an area in at least one of the one or more first input video frames where a face is detected.

Example 19 provides the one or more non-transitory computer-readable media of example 17 or 18, where: the second detection output includes a second bounding box specifying an area in at least one of the one or more first input video frames where a person is detected and a face is not detected.

Example 20 provides the one or more non-transitory computer-readable media of any one of examples 17-19, where the instructions further cause the one or more processors to: pad a first bounding box for a first one of the one or more first input video frames in the first detection output according to a first configuration to generate a first padded bounding box; and pad a second bounding box for the first one of the one or more first input video frames in the second detection output according to a second configuration to generate a second padded bounding box.

Example 21 provides the one or more non-transitory computer-readable media of example 20, where the instructions further cause the one or more processors to: generate a joint region that includes at least a union of at least the first padded bounding box and the second padded bounding box.

Example 22 provides the one or more non-transitory computer-readable media of any one of examples 17-21, where the instructions further cause the one or more processors to: pad a first bounding box for a first one of the one or more first input video frames in the first detection output according to a first configuration to generate a first padded bounding box; pad a third bounding box for the first one of the one or more first input video frames in the first detection output according to the first configuration to generate a third padded bounding box; and generate a joint region that includes at least a union of at least the first padded bounding box and the third padded bounding box.

Example 23 provides the one or more non-transitory computer-readable media of any one of examples 17-22, where the instructions further cause the one or more processors to: store one or more joint regions in a first-in first-out buffer, where the one or more joint regions are generated based on the first detection output and the second detection output.

Example 24 provides the one or more non-transitory computer-readable media of any one of examples 17-23, where determining the merged region of interest includes receiving one or more joint regions from a first-in first-out buffer; accumulating hits of the one or more joint regions on cells in a grid counter; and producing the merged region of interest based on the grid counter and a threshold on the hits.

Example 25 provides the one or more non-transitory computer-readable media of example 24, where: the one or more joint regions include a first joint region generated based on the first detection output and a second joint region generated based on the second detection output; the first rate specifies that the first detection output is received every first number of frames; the second rate specifies that the second detection output is received every second number of frames; and accumulating the hits on the cells in the grid counter includes computing weighted sums according to the first number and the second number.

Example 26 provides the one or more non-transitory computer-readable media of any one of examples 17-25, where determining the target region of interest includes increasing a size of the merged region of interest to reach a minimum size to produce the target region of interest while centering the merged region of interest within the target region of interest.

Example 27 provides the one or more non-transitory computer-readable media of any one of examples 17-26, where determining the target region of interest includes increasing a size of the merged region of interest to reach an aspect ratio to produce the target region of interest while centering the merged region of interest within the target region of interest.

Example 28 provides the one or more non-transitory computer-readable media of any one of examples 17-26, where the instructions further cause the one or more processors to: determine that a border of the merged region of interest meets a border of the applied region of interest.

Example 29 provides the one or more non-transitory computer-readable media of any one of examples 17-28, where the instructions further cause the one or more processors to: determine that a padded version of the target region of interest is smaller than the applied region of interest.

Example 30 provides the one or more non-transitory computer-readable media of any one of examples 17-29, where the instructions further cause the one or more processors to: determine that a center point of the merged region of interest is outside of a center region of the applied region of interest.

Example 31 provides the one or more non-transitory computer-readable media of any one of examples 17-30, where determining the one or more intermediate regions of interest includes determining the one or more intermediate regions of interest that evenly divide a difference between the target region of interest and the applied region of interest.

Example 32 provides the one or more non-transitory computer-readable media of any one of examples 17-31, where determining the one or more intermediate regions of interest includes determining the one or more intermediate regions of interest that divide a difference between the target region of interest and the applied region of interest according to a normal distribution.

Example 33 provides an apparatus, including one or more processors; and one or more non-transitory computer-readable media storing instructions that, when executed by one or more processors, cause the one or more processors to: receive a first detection output at a first rate and a second detection output at a second rate different from the first rate, where the first detection output and the second detection output are generated based on one or more first input video frames of an input video; determine a merged region of interest based on the first detection output, the second detection output, the first rate, and the second rate; determine a target region of interest based on the merged region of interest; determining an applied region of interest that is used to crop a second input video frame of the input video to generate a first framed video frame; determine one or more intermediate regions of interest based on the merged region of interest, the target region of interest, and the applied region of interest; and crop one or more third input video frames of the input video using the one or more intermediate regions of interest and the target region of interest to generate further framed video frames.

Example 34 provides the apparatus of example 33, where: the first detection output includes a first bounding box specifying an area in at least one of the one or more first input video frames where a face is detected.

Example 35 provides the apparatus of example 33 or 34, where: the second detection output includes a second bounding box specifying an area in at least one of the one or more first input video frames where a person is detected and a face is not detected.

Example 36 provides the apparatus of any one of examples 33-35, where the instructions further cause the one or more processors to: pad a first bounding box for a first one of the one or more first input video frames in the first detection output according to a first configuration to generate a first padded bounding box; and pad a second bounding box for the first one of the one or more first input video frames in the second detection output according to a second configuration to generate a second padded bounding box.

Example 37 provides the apparatus of example 36, where the instructions further cause the one or more processors to: generate a joint region that includes at least a union of at least the first padded bounding box and the second padded bounding box.

Example 38 provides the apparatus of any one of examples 33-37, where the instructions further cause the one or more processors to: pad a first bounding box for a first one of the one or more first input video frames in the first detection output according to a first configuration to generate a first padded bounding box; pad a third bounding box for the first one of the one or more first input video frames in the first detection output according to the first configuration to generate a third padded bounding box; and generate a joint region that includes at least a union of at least the first padded bounding box and the third padded bounding box.

Example 39 provides the apparatus of any one of examples 33-38, where the instructions further cause the one or more processors to: store one or more joint regions in a first-in first-out buffer, where the one or more joint regions are generated based on the first detection output and the second detection output.

Example 40 provides the apparatus of any one of examples 33-39, where determining the merged region of interest includes receiving one or more joint regions from a first-in first-out buffer; accumulating hits of the one or more joint regions on cells in a grid counter; and producing the merged region of interest based on the grid counter and a threshold on the hits.

Example 41 provides the apparatus of example 40, where: the one or more joint regions include a first joint region generated based on the first detection output and a second joint region generated based on the second detection output; the first rate specifies that the first detection output is received every first number of frames; the second rate specifies that the second detection output is received every second number of frames; and accumulating the hits on the cells in the grid counter includes computing weighted sums according to the first number and the second number.

Example 42 provides the apparatus of any one of examples 33-41, where determining the target region of interest includes increasing a size of the merged region of interest to reach a minimum size to produce the target region of interest while centering the merged region of interest within the target region of interest.

Example 43 provides the apparatus of any one of examples 33-42, where determining the target region of interest includes increasing a size of the merged region of interest to reach an aspect ratio to produce the target region of interest while centering the merged region of interest within the target region of interest.

Example 44 provides the apparatus of any one of examples 33-43, where the instructions further cause the one or more processors to: determine that a border of the merged region of interest meets a border of the applied region of interest.

Example 45 provides the apparatus of any one of examples 33-44, where the instructions further cause the one or more processors to: determine that a padded version of the target region of interest is smaller than the applied region of interest.

Example 46 provides the apparatus of any one of examples 33-45, where the instructions further cause the one or more processors to: determine that a center point of the merged region of interest is outside of a center region of the applied region of interest.

Example 47 provides the apparatus of any one of examples 33-46, where determining the one or more intermediate regions of interest includes determining the one or more intermediate regions of interest that evenly divide a difference between the target region of interest and the applied region of interest.

Example 48 provides the apparatus of any one of examples 33-47, where determining the one or more intermediate regions of interest includes determining the one or more intermediate regions of interest that divide a difference between the target region of interest and the applied region of interest according to a normal distribution.

Example A provides one or more non-transitory computer-readable media storing instructions that, when executed by one or more processors, cause the one or more processors to perform any one of the methods provided in examples 1-13 and the methods described herein.

Example B provides an apparatus comprising means to carry out or means for carrying out any one of the methods provided in examples 1-13 and the methods described herein.

Example C provides a framing part (e.g., framing 284) as described and illustrated herein.

Example D provides a multi-detector fusion part (e.g., multi-detector fusion 212) as described and illustrated herein.

Example E provides a motion planner or motion planning part (e.g., motion planner 214) as described and illustrated herein.

Example F provides a multi-detector fusion part (e.g., multi-detector fusion 212) and a motion planner part (e.g., motion planner 214) as described and illustrated herein.

Example G provides a system (e.g., system 200) as described and illustrated herein.

Example H provides a system comprising one or more detectors (e.g., detectors 210), a multi-detector fusion part (e.g., multi-detector fusion 212), and a motion planner part (e.g., motion planner 214) as described and illustrated herein.

*Variations and other notes*

Although the operations of the example method shown in and described with reference to FIGS. 7 and 10 are illustrated as occurring once each and in a particular order, it will be recognized that the operations may be performed in any suitable order and repeated as desired. Additionally, one or more operations may be performed in parallel. Furthermore, the operations illustrated in FIGS. 7 and 10 may be combined or may include more or fewer details than described.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

**Claims**

**1.** A method, comprising:

receiving a first detection output at a first rate and a second detection output at a second rate different from the first rate, wherein the first detection output and the second detection output are generated based on one or more first input video frames of an input video;

determining a merged region of interest based on the first detection output, the second detection output, the first rate, and the second rate;

determining a target region of interest based on the merged region of interest;

determining an applied region of interest that is used to crop a second input video frame of the input video to generate a first framed video frame;

determining one or more intermediate regions of interest based on the merged region of interest, the target region of interest, and the applied region of interest; and

cropping one or more third input video frames of the input video using the one or more intermediate regions of interest and the target region of interest to generate further framed video frames.

2. The method of claim 1, wherein:
the first detection output comprises a first bounding box specifying an area in at least one of the one or more first input video frames where a face is detected.

3. The method of claim 1 or 2, wherein:
the second detection output comprises a second bounding box specifying an area in at least one of the one or more first input video frames where a person is detected and a face is not detected.

4. The method of claim anyone of claims 1-3, wherein determining the merged region of interest comprises:

receiving one or more joint regions from a first-in first-out buffer;

accumulating hits of the one or more joint regions on cells in a grid counter; and

producing the merged region of interest based on the grid counter and a threshold on the hits.

5. The method of claim 4, wherein:

the one or more joint regions comprise a first joint region generated based on the first detection output and a second joint region generated based on the second detection output;

the first rate specifies that the first detection output is received every first number of frames;

the second rate specifies that the second detection output is received every second number of frames; and

accumulating the hits on the cells in the grid counter comprises computing weighted sums according to the first number and the second number.

6. The method of any one of claims 1-5, wherein determining the target region of interest comprises:
increasing a size of the merged region of interest to reach a minimum size to produce the target region of interest while centering the merged region of interest within the target region of interest.

7. The method of any one of claims 1-6, wherein determining the target region of interest comprises:
increasing a size of the merged region of interest to reach an aspect ratio to produce the target region of interest while centering the merged region of interest within the target region of interest.

8. The method of any one of claims 1-7, further comprising one or more of the following:

(1) determining that a border of the merged region of interest meets a border of the applied region of interest;
(2) determining that a padded version of the target region of interest is smaller than the applied region of interest; and
(3) determining that a center point of the merged region of interest is outside of a center region of the applied region of interest.

9. The method of any one of claims 1-8, wherein determining the one or more intermediate regions of interest comprises:

determining the one or more intermediate regions of interest that evenly divides a difference between the target region of interest and the applied region of interest; or

determining the one or more intermediate regions of interest that divides a difference between the target region of interest and the applied region of interest according to a normal distribution.

10. The method of any one of claims 1-9, further comprising:

    padding a first bounding box for a first one of the one or more first input video frames in the first detection output according to a first configuration to generate a first padded bounding box;

    padding a second bounding box for the first one of the one or more first input video frames in the second detection output according to a second configuration to generate a second padded bounding box; and

    optionally generating a joint region that includes at least a union of at least the first padded bounding box and the second padded bounding box.

11. The method of any one of claims 1-10, further comprising:

    padding a first bounding box for a first one of the one or more first input video frames in the first detection output according to a first configuration to generate a first padded bounding box;

    padding a third bounding box for the first one of the one or more first input video frames in the first detection output according to the first configuration to generate a third padded bounding box; and

    generating a joint region that includes at least a union of at least the first padded bounding box and the third padded bounding box.

12. The method of any one of claims 1-11, further comprising:

    storing one or more joint regions in a first-in first-out buffer, wherein the one or more joint regions are generated based on the first detection output and the second detection output.

13. One or more non-transitory computer-readable media storing instructions that, when executed by one or more processors, cause the one or more processors to perform a method as claimed in any one of the preceding claims.

14. An apparatus comprising means to perform a method as claimed in any one of claims 1-12.

15. A computer program comprising instructions, which, when the program is executed by a computer, cause the computer to carry out the method as claimed in any one of claims 1-12.

| INPUT VIDEO FRAME | OUTPUT VIDEO FRAME |
|---|---|

FIG. 1

**FIG. 2**

FIG. 3

FIG. 4

FIG. 5

FIG. 6

FIG. 7

FIG. 8

FIG. 9

**1000**

```
┌─────────────────────────────────────────────────────────┐
│ RECEIVE A FIRST DETECTION OUTPUT AT A FIRST RATE AND A   │
│ SECOND DETECTION OUTPUT AT A SECOND RATE DIFFERENT FROM  │
│ THE FIRST RATE 1002                                      │
└─────────────────────────────────────────────────────────┘
                            │
                            ▼
┌─────────────────────────────────────────────────────────┐
│ DETERMINE A MERGED REGION OF INTEREST BASED ON THE FIRST │
│ DETECTION OUTPUT, THE SECOND DETECTION OUTPUT, THE FIRST │
│ RATE, AND THE SECOND RATE 1004                           │
└─────────────────────────────────────────────────────────┘
                            │
                            ▼
┌─────────────────────────────────────────────────────────┐
│ DETERMINE A TARGET REGION OF INTEREST BASED ON MERGED    │
│ REGION OF INTEREST 1006                                  │
└─────────────────────────────────────────────────────────┘
                            │
                            ▼
┌─────────────────────────────────────────────────────────┐
│ DETERMINE AN APPLIED REGION OF INTEREST 1008             │
└─────────────────────────────────────────────────────────┘
                            │
                            ▼
┌─────────────────────────────────────────────────────────┐
│ DETERMINE ONE OR MORE INTERMEDIATE REGIONS OF INTEREST   │
│ BASED ON THE MERGED REGION OF INTEREST, THE TARGET       │
│ REGION OF INTEREST, AND THE APPLIED REGION OF INTEREST   │
│ 1010                                                     │
└─────────────────────────────────────────────────────────┘
                            │
                            ▼
┌─────────────────────────────────────────────────────────┐
│ CROP ONE OR MORE THIRD INPUT VIDEO FRAMES OF THE VIDEO   │
│ USING THE ONE OR MORE INTERMEDIATE REGIONS OF INTEREST   │
│ AND THE TARGET REGION OF INTEREST TO GENERATE FURTHER    │
│ FRAMED VIDEO FRAMES 1012                                 │
└─────────────────────────────────────────────────────────┘
```

# FIG. 10

**COMPUTING DEVICE 1100**

**MEMORY 1104**

| 204 | 230 | 304 | 604 | |
|---|---|---|---|---|

| 210 | 212 | 214 |
|---|---|---|
| | 284 | |

1000

PROCESSING DEVICE
1102

ANTENNA 1122

COMMUNICATION DEVICE
1112

DISPLAY DEVICE
1106

GPS DEVICE
1116

POWER
SOURCE /
POWER
CIRCUITRY
1114

AUDIO OUTPUT DEVICE
1108

AUDIO INPUT DEVICE
1118

OTHER OUTPUT DEVICE
1110

OTHER INPUT DEVICE
1120

SENSOR
1130

# FIG. 11

Europäisches
Patentamt

European
Patent Office

Office européen
des brevets

# EUROPEAN SEARCH REPORT

**Application Number**

EP 25 15 7113

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 287 947 A1 (DOLBY LABORATORIES LICENSING CORP [US]) 28 February 2018 (2018-02-28) * paragraph [0002] * * paragraph [0014] - paragraph [0022] * * figures 2C-D, 5 * * table 1 * | 1-15 | INV. G06T3/40 G06V10/25 G06V40/16 H04N7/14 H04N7/15 |
| Y | US 2023/247076 A1 (YU CHI-CHIAN [US]) 3 August 2023 (2023-08-03) * paragraph [0129] * * figure 12 * | 1-15 | |

-----

-----

**TECHNICAL FIELDS SEARCHED (IPC)**

G06T
G06V
H04N

The present search report has been drawn up for all claims

| Place of search | Date of completion of the search | Examiner |
|---|---|---|
| The Hague | 30 April 2025 | De Coi, Juri |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 7113

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2025

| Patent document cited in search report | | Publication date | Patent family member(s) | | Publication date |
|---|---|---|---|---|---|
| EP 3287947 | A1 | 28-02-2018 | EP | 3287947 A1 | 28-02-2018 |
| | | | US | 2018063482 A1 | 01-03-2018 |
| US 2023247076 | A1 | 03-08-2023 | US | 11563790 B1 | 24-01-2023 |
| | | | US | 2023247076 A1 | 03-08-2023 |
| | | | WO | 2023147083 A1 | 03-08-2023 |

EPO FORM P0459

For more details about this annex : see Official Journal of the European Patent Office, No. 12/82